(19) Europäisches Patentamt

European Patent Office

Office européen des brevets

(11) EP 1 195 712 A1

(12) EUROPEAN PATENT APPLICATION
published in accordance with Art. 158(3) EPC

(43) Date of publication:
10.04.2002 Bulletin 2002/15

(51) Int Cl.⁷: **G06K 17/00**, G06K 7/12,
B42D 15/10

(21) Application number: 01921897.3

(22) Date of filing: 19.04.2001

(86) International application number:
PCT/JP01/03335

(87) International publication number:
WO 01/80172 (25.10.2001 Gazette 2001/43)

(84) Designated Contracting States:
AT BE CH CY DE DK ES FI FR GB GR IE IT LI LU
MC NL PT SE TR

(30) Priority: 19.04.2000   JP 2000118067
20.04.2000   JP 2000118790
21.04.2000   JP 2000120675
25.04.2000   JP 2000123390
17.05.2000   JP 2000144271
25.05.2000   JP 2000154708

(71) Applicant: **Kabushiki Kaisha TOPCON**
**Tokyo 174-0052 (JP)**

(72) Inventors:
• **HORI, Nobuo**
  **Tokyo 174-0052 (JP)**
• **NAGANO, Shigenori**
  **Tokyo 174-0052 (JP)**

(74) Representative: **Pfenning, Meinig & Partner**
**Mozartstrasse 17**
**80336 München (DE)**

(54) **CARD GENUINE JUDGING APPARATUS AND CARD GENUINE JUDGING SYSTEM**

(57)     A card authenticity judging apparatus includes a light projecting system for projecting a laser measurement light Q1 toward hologram which is provided on surface of a card 1 and on which an image 4' based on a grating pattern 3 is formed, a Fourier transform lens 27 for forming grating pattern image on a light receiving section 28 on the basis of reflected diffraction luminous flux of being reflected from the hologram, and a judging means 30' for judging authenticity of the card 1 based on photoelectric output from the light receiving section 28, in which authenticity of the card 1 is made to judge depending on grating pattern image based on reflected diffraction light.

FIG.1 (A)

FIG.1 (B)

**Description**

BACKGROUND OF THE INVENTION

Technical Field of the invention

The present invention relates to a card authenticity judging apparatus for judging authenticity of a card of having a hologram on which a grating pattern-based image is formed.

Description of the Related Art

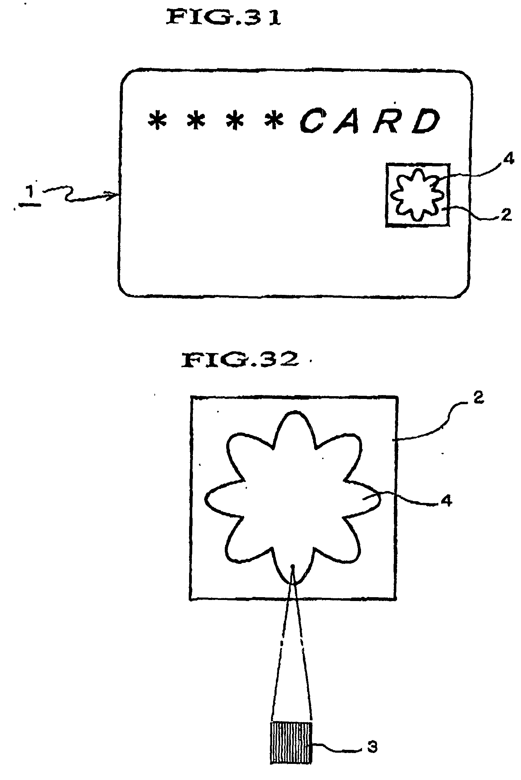

Conventionally, as illustrated in FIG. 31, it is known that a hologram seal 2 is affixed to a surface of a card 1 such as a credit card and so forth. An image 4 of the hologram in an imitation of design, a mark, character and so forth of being used with a grating pattern 3 is formed on the hologram seal 2 as illustrated in FIG. 32 with a drawing enlarged. This hologram seal 2 is used for discrimination of authenticity of the card 1. In the conventional method, authenticity of the card. 1 is made to judge while examining images formed on the hologram seal 2 with naked eye.

However, it is difficult that authenticity of the card 1 is judged in such a way as to examine the image 4' formed on the hologram seal 2 with the naked eye, because the image varies in accordance with direction of incident light, and/or there are injuries on the card, it is difficult to judge authenticity of the card objectively.

Accordingly, it can be considered that the entire shape of the image 4', the partial shape of the image 4', and position of hologram seal 2 of being affixed to the card 1, are judged while using an optical device, then authenticity of the card 1 is made to judge on the basis of judgment result.

However, since it is easy to imitate the shape of the image 4' and/or affixed position, so, it is also difficult to conduct judgment of authenticity of the card 1 objectively by using the conventional optical device.

In addition, concerning the card 1, since the card 1 itself is bent backward, a surface of the image 4' is grinded down, and/or injury occurs, caused by aged deterioration concurrent usage, so, it is increasingly difficult to judge authenticity of the card 1 of occurring aged deterioration in the conventional optical device.

Further, in order to make certain of anti-counterfeit technology of such card 1, a plurality of images are formed onto the hologram 2 while changing arrangement formation direction of diffraction grating of configuring grating patterns 3 in many cases.

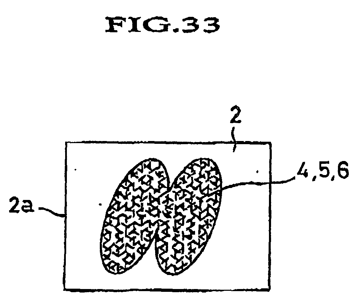

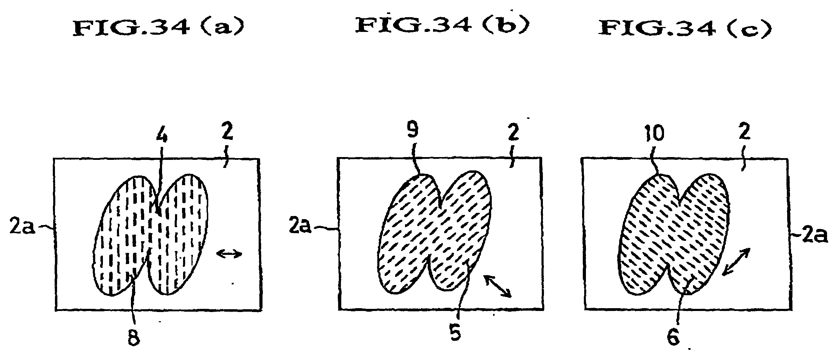

FIG. 33 illustrates a receangulsr shaped hologram seal 2 of being formed by three kinds of images on the basis of three grating patterns 4, 5 and 6. FIG. 34(a) illustrates an image 8 on the basis of the grating pattern 4 in which diffraction grating is arranged to be formed in the direction perpendicular to one side 2a of the rectangular shaped hologram seal 2. FIG. 34(b) illustrates an image 9 on the basis of the grating pattern 5 in which diffraction grating is arranged to be formed in the right oblique 45 degrees direction against arrangement direction of the diffraction grating of the grating pattern 4. FIG. 34(c) illustrates an image 10 on the basis of the grating pattern 6 in which diffraction grating is arranged to be formed in the left oblique 45 degrees direction against arrangement direction of diffraction grating of the grating pattern 4. The hologram seal 2 illustrated in FIG. 33 is formed in such a way that these three images 8, 9 and 10 ate superimposed, thus appearances of the images 8, 9, and 10 are varied depending on condition of the incident light to the hologram seal 2. In FIG. 34, arrowheads indicate arrangement formation direction of the diffraction grating, and extending direction of respective diffraction grating is crossed at right angles to the arrangement direction.

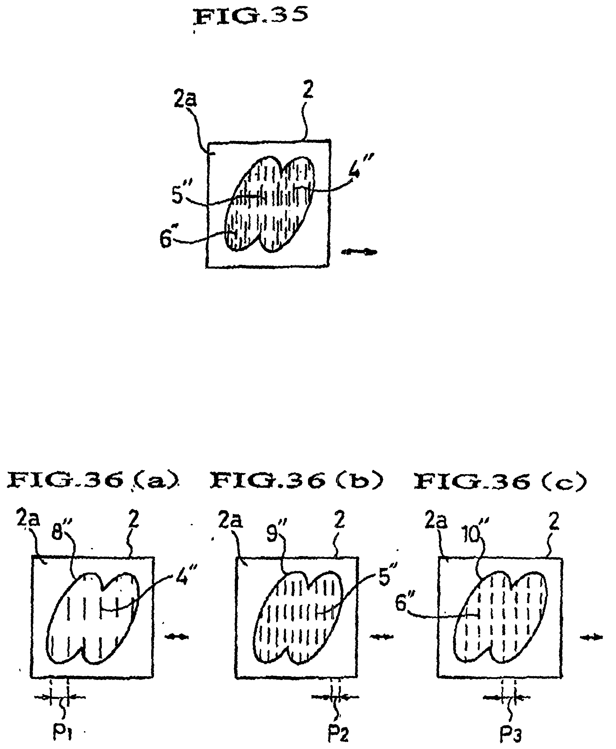

In addition, FIG. 35 illustrates a rectangular shaped hologram seal 2 in which three kinds of images are formed on the basis of grating patterns 4", 5" and 6" composed of diffraction gratings with different pitches. FIG. 36(a) illustrates an image 8" on the basis of the grating pattern 4" in which diffraction grating is arranged to be formed in the direction perpendicular to one side 2a of the rectangular shaped hologram seal 2 and the grating pattern 4" itself is configured from diffraction grating of pitch P1. FIG. 36(b) illustrates an image 9" on the basis of the grating pattern 5" configured from diffraction grating of pitch P2 in which arrangement formation direction of diffraction grating is the same direction as that of the diffraction grating of the grating pattern 4". FIG. 36(c) illustrates an image 10" on the basis of the grating pattern 6" configured from diffraction grating of pitch P3 in which arrangement formation direction of the diffraction grating is the same direction as that of the grating patterns 4", 5". The hologram seal 2 illustrated in FIG. 35 is formed in such a way that these three images 8", 9" and 10" are superimposed, thus appearances of the images 8", 9", and 10" are varied depending on condition of the incident light to the hologram seal 2. In FIGS. 35 and 36, arrowheads indicate arrangement formation direction of the diffraction grating, and extending direction of respective diffraction grating is crossed at right angles to the arrangement direction thereof.

Further, in many cases, concerning the card 1, not only the image 4', but also the grating patterns are different depending on the production company. In addition, in some cases, in the same production company, not only the image 4', but also the grating patterns are updated.

In view of the foregoing the present invention is made in considezntion of the fact that depth and pitch of groove of diffraction grating of grating pattern on which image of hologram is formed are controlled stringently, and to provide a card authenticity judging apparatus capable of optically judging authenticity of the card objectively and speedy.

## SUMMARY OF THE INVENTION

According to a first aspect of the present invention there is provided a card authenticity judging apparatus which comprises a light projecting system for projecting laser measurement light toward hologram that is provided on a surface of a card and on which an image on the basis of grating pattern is formed, a Fourier transform lens for forming grating pattern image on the basis of reflected diffraction luminous flux of being reflected from the hologram on its light receiving section, and a judging means for judging authenticity of the card on the basis of photoelectric output from the light receiving section.

According to a second aspect of the present invention, in the first aspect, there is provided the card authenticity judging apparatus, wherein the judging means is provided with a display section for displaying its judgment result.

According to a third aspect of the present invention, in the first or the second aspect, there is provided the card authenticity judging apparatus, wherein the judging means judges authenticity of the card on the basis of analysis result from an analysis section that analyzes grating pattern image.

According to a fourth aspect of the present invention, in the third aspect, there is provided the card authenticity judging apparatus, wherein the analysis section outputs its analysis result to the judging means while analyzing formation position of grating pattern image, peak intensity, and spread width.

According to a fifth aspect of the present invention, in the fourth aspect, there is provided the card authenticity judging apparatus, wherein the judging means, when all of formation position of grating pattern image, peak intensity, and spread width are authentic, judges the card to be authentic card and displays the effect of being authentic card on the display section.

According to a sixth aspect of the present invention, in the fourth aspect, there is provided the card authenticity judging apparatus, wherein the judging means, when any one or more from among formation position of grating pattern image, peak intensity, and spread width is camouflage, judges the card to be camouflage card and displays the effect of being camouflage can on the display section.

According to a seventh aspect of the present invention, in the fourth aspect, there is provided the card authenticity judging apparatus, wherein the judging means, when all of formation position of grating pattern image, peak intensity, and sprend width is authentic, judges the card to be authentic card, when any one thereof is pseudo within predetermined enalysis limit, judges the card to be temporarily authentic card, and when any one or mora thereof is camouflage, judges the card to be pseudo card, displays the judgment result on the display section.

According to an eighth aspect of the present invention, in the fourth aspect, there is provided the card authenticity judging apparatus, wherein the judging means, when plural kinds of pitches or directions of grating pattern exist, judges by using analysis result from one of them or from the whole.

According to a ninth aspect of the present invention, there is provided a card authenticity judging apparatus which comprises a light projecting system for projecting laser measurement light toward a hologram which is provided on a card surface and on which an image on the basis of grating pattern is formed, a light receiving system for receiving grating pattern image on the basis of reflected diffraction light of being reflected from the hologram and regularly reflected image due to regularly reflected luminous flux of being regularly reflected from the hologram, and a judging means for judging authenticity of the card on the basis of both the grating pattern image and the regularly reflected image.

According to a tenth aspect of the present invention, in the ninth aspect, there is provided the card authenticity judging apparatus, wherein the light receiving system has one light receiving section that receives both the grating pattern image and the regular reflected images with common use condition.

According to an eleventh aspect of the present invention, in the tenth aspect, there is provided the card authenticity judging apparatus, wherein the light receiving system has one Fourier transform lens which is provided for the sake of common use of causing the light receiving section to receive both the grating pattern image and the regular reflected image.

According to a twelfth aspect of the present invention, in any one of the ninth aspect to the eleventh aspect, there is provided the card authenticity judging apparatus, wherein the judging means is provided with a display section for displaying judgment result.

According to a thirteenth aspect of the present invention, in any one of the ninth aspect to the twelfth aspect, there is provided the card authenticity judging apparatus, wherein the judging means judges authenticity of the card on the basis of photoelectric output from an analysis section of outputting both analysis result concerning formation position of grating pattern image, peak intensity, and spread width as well as analysis result concerning light receiving position of regular reflected image and spread width.

According to a fourteenth aspect of the present invention, in the thirteenth aspect, there is provided the card authenticity judging apparatus, wherein the judging means, when all of analysis results concerning formation position of grating pattern image of being analyzed at the analysis section, peak intensity, and spread width fall within permitted limit, judges the card to be authentic card and displays the effect of being authentic card on the display section.

According to a fifteenth aspect of the present invention, in the thirteenth aspect, there is provided the card authenticity judging apparatus, wherein the judging means, when any one or more of analysis results concerning formation position of grating pattern image of being analyzed at the analysis section, peak intensity, and spread width does not fall within permitted limit, judges the card to be counterfeit card and displays the effect of being counterfeit card on the display section.

According to a sixteenth aspect of the present invention, in the thirteenth aspect, there is provided the card authenticity judging apparatus, wherein the judging means, when all of analysis results concerning formation position of grating pattern image of being analyzed at the analysis section, peak intensity, and spread width is authentic, judges the card to be authentic card, when any one thereof falls within predetermined limit deviated from permitted limit, judges the card to be temporarily authentic card, and when any one or more thereof does not fall within the predetermined limit, judges the card to be pseudo card, and displays the judgment result on the display section.

According to a seventeenth aspect of the present invention, in any one of the fourteenth aspect to the sixteenth aspect, there is provided the card authenticity judging apparatus, wherein the judging means, when obtaining analysis result in which light receiving position of regular reflected image shifts from normal position, judges analysis result of grating pattern image in consideration of the analysis result.

According to an eighteenth aspect of the present invention, in any one of the fourteenth aspect to the sixteenth aspect, there is provided the card authenticity judging apparatus, wherein the judging means, when obtaining analysis result in which spread width of regular reflected image is wider than formal width, judges analysis result of grating pattern image in consideration of the analysis result.

According to a nineteenth aspect of the present invention, in any one of the ninth aspect to the eighteenth aspect, there is provided the card authenticity judging apparatus, wherein the judging means, when plural kinds of pitches or plural kinds of directions of grating pattern exist, judges the card by using one of them or by using a plurality of analysis results.

According to a twentieth aspect of the present invention, there is provided a card authenticity judging apparatus which comprises a light projecting system for projecting measurement light toward hologram which is provided on a card and on which an image on the basis of grating pattern is formed, and a light receiving system for detecting reflected diffraction light of being reflected from the hologram, wherein, in order to judge whether the card is authentic card or counterfeit card, there is provided an incident direction changing means for changing incident direction of the measurement light toward the hologram.

According to a twenty-first aspect of the present invention, in the twentieth aspect, there is provided the card authenticity judging apparatus, wherein the incident direction changing means changea incident direction to hologram depending on kinds of cards.

According to a twenty-second aspect of the present invention, in the twentieth aspect or the twenty-first aspect, theze is provided the card authenticity judging apparatus, which further comprises a judging means for judging authenticity of the card while analyzing respective reflected diffraction lights obtained in such a way as to change incident direction of the measurement light to the hologram.

According to a twenty-third aspect of the present invention, in the twentieth aspect or the twenty-first aspect, there is provided the card authenticity judging apparatus, wherein the light receiving system is made up of a line sensor for receiving the reflected diffraction light, and a Fourier transform lens that is put between the line sensor and the card.

According to a twenty-fourth aspect of the present invention, in the twentieth aspect or the twenty-first aspect, there is provided the card authenticity judging apparatus, wherein the light projecting system is provided with a plurality of laser light sources, the incident direction changing means is a lighting/putting-out-lights switch for causing the respective laser light sources to be subjected to lighting/putting-out-lights.

According to a twenty-fifth aspect of the present invention, in the twentieth aspect or the twenty-first aspect, there is provided the card authenticity judging apparatus, wherein the light projecting system is provided with a laser light source and a revolving means for revolving the laser fight source to the card and the incident direction changing means is composed of the revolving means.

According to a twenty-sixth aspect of the present invention, in the twentieth aspect or the twenty-first aspect, there is provided the card authenticity judging apparatus, wherein the incident direction changing means is a revolving means for revolving the card with the card supported.

According to a twenty-seventh aspect of the present invention, in the twenty-second aspect, there is provided the card authenticity judging apparatus, wherein the judging means changes its allowed value of authenticity judgment of the card accompanying with change of incident direction of the measurement light.

According to a twenty-eighth aspect of the present invention, there is provided a card authenticity judging apparatus which comprises a light projecting system for projecting measurement light toward hologram which is provided on a card and on which a plurality of images are formed on basis of a plurality of grating patterns, a light receiving system having a line sensor for detecting each of a plurality of reflected diffraction lights of being subjected to inflection and diffraction due to the grating pattern, and a judging means for judging whether the card is authentic card or counterfeit card while analyzing photoelectric output on the basis of the respective reflected diffraction lights of the line sensor.

According to a twenty-ninth aspect of the present invention, in the twenty-eighth aspect, there is provided the card authenticity judging apparatus, wherein arrangement formation direction of the plurality of reflected diffraction lights is the same direction as extending direction of the line sensor.

According to a thirtieth aspect of the present invention, in the twenty-eighth aspect, there is provided the card authenticity judging apparatus, wherein arrangement formation direction of the plurality of reflected diffraction lights is direction perpendicular to extending direction of the line sensor.

According to a thirty-first aspect of the present invention, in the twenty-eighth aspect, there is provided the card authenticity judging apparatus, wherein the light projecting system consists of one laser light source.

According to a thirty-second aspect of the present invention, in the twenty-eighth aspect, there is provided the card authenticity judging apparatus, wherein the light receiving system has a Fourier transform lens that is put between the line sensor and the card.

According to a thirty-third aspect of the present invention, there is provided a card authenticity judging apparatus which comprises a light projecting system for projecting measurement light toward hologram which is provided on a card and on which a plurality of images are formed on the basis of grating pattern whose arrangement formation direction of diffraction grating is different, a light receiving system having a plurality of line sensors for detecting respective reflected diffraction lights of being subjected to reflection and diffraction due to said respective diffraction grating, and a judging means for judging whether the card is authentic card or counterfeit card while analyzing photoelectric output on the basis of the respective reflected diffraction lights of the respective line sensors.

According to a thirty-fourth aspect of the present invention, in the thirty-third aspect, there is provided the card authenticity judging apparatus, wherein the light receiving system has a Fourier transform lens that is put between the line sensor and the card.

According to a thirty-fifth aspect of the present invention, there is provided a card authenticity judging system which comprises an apparatus body that is provided with an optical system whose light receiving section receives grating pattern image of laser measurement light of being projected toward hologram which is provided on surface of a card and on which an image on the basis of grating pattern is formed, and a server of storing therein allowed reference value for judging authenticity of the card on the basis of grating pattern image, wherein, in order to judge authenticity of the card while comparing photoelectric output concerning the grating pattern image with the allowed reference value of being stored in the server, the apparatus body is made to connect to the server through a telecommunication line.

According to a thirty-sixth aspect of the present inventin, in the thirty-fifth aspect, there is provided the card authenticity judging system, wherein the optical system is provided with a Fourier transform lens for causing grating pattern image to be received by the light receiving section.

According to a thirty-seventh aspect of the present invention, in the thirty-fifth aspect or the thirty-sixth aspect, there is provided the card authenticity judging system, wherein the apparatus body is provided with a display section for displaying judgment result.

According to a thirty-eighth aspect of the present invention, in any one of the thirty-fifth aspect to the thirty-seventh aspect, there is provided the card authenticity judging system, wherein the server is provided with an analysis section for receiving to analyze photoelectric output of grating pattern image transmitted from the light receiving section, and a judging means for conducting authenticity judgment based on both analysis result by the analysis section and allowed reference value of being stored in the server, then, the server transmits the judgment result to the apparatus body.

According to a thirty-ninth aspect of the present invention, in any one of the thirty-fifth aspect to the thirty-seventh aspect, there is provided the card authenticity judging system, wherein the apparatus body is provided with an analysis section for receiving to analyze photoelectrio output of grating pattern image transmitted from the light receiving section and for transmitting the analysis result to the server, and the server is provided with a judging means for judging authenticity of the card based on both analysis result transmitted from the analysis section and allowed reference value of being stored in the server, and for transmitting the judgment result to the apparatus body.

According to a fortieth aspect of the present invention, in any one of the thirty-fifth aspect to the thirty-seventh aspect, there is provided the card authenticity judging system, wherein the apparatus body is provided with an analysis section for receiving to analyze photoelectric output of grating pattern image transmitted from the light receiving section, and a judging means for conducting authenticity judgment of the card based on both allowed reference value received from the server and analysis result of the analysis section.

According to a forty-first aspect of the present invention, in any one of the thirty-eighth aspect to the fortieth aspect, there is provided the card authenticity judging system, wherein the analysis section outputs analysis result concerning formation position of grating pattern image, peak intensity, spread width to the judging means.

According to a forty-second aspect of the present invention, in the forty-first aspect, there is provided the card authenticity judging system, wherein the judging means, when all of analysis results concerning formation position of grating pattern image analyzed by said analysis section, peak intensity, spread width falls within permitted limit, judges the card to be authentic card.

According to a forty-third aspect of the present invention, in the thirty-ninth aspect, there is provided the card authenticity judging system, wherein the judging means, when all of analysis results concerning formation position of grating pattern image of being analyzed at the analysis section, peak intensity, and spread width is authentic, judges the card to be authentic card, when any one thereof falls within predetermined limit deviated from permitted limit, judges the card to be temporarily authentic card, and when any one or more thereof does not fall within the predetermined limit, judges the card to be pseudo card.

According to a forty-fourth aspect of the present invention, in any one of the thirty-eighth aspect to the forty-third aspect, there is provided the card. authenticity judging system, wherein the judging means, when plural kinds of pitches or plural kinds of directions of grating pattern exist, judges the card by using one of them or by using a plurality of analysis results.

By these configurations described above, laser measurement light is made to project toward hologram from light projecting system. So, grating pattern image based on reflected diffraction light from hologram is received on light receiving section through Fourier transform lens. Photoelectric output from the light receiving section is input to judging means, then authenticity of the card is judged by the judging means.

BRIEF DESCRIPTION OF THE DRAWINGS

FIG. 1(A) is an outline side view of a card authenticity judging apparatus according to a first embodiment of the present invention;

FIG. 1(B) is an outline plan view of the card authenticity judging apparatus according to the first embodiment of the present invention;

FIG. 2(A) is an explanation view of relative relationship of grating pattern, Fourier transform lens, and line sensor;

FIG. 2(B) is an amount of light distribution map in the case of authentic card;

FIG. 2(C) is an explanation view for explaining depth and dispersion of groove of diffraction grating of grating pattern in the case of authentic card;

FIG. 3(A) is an explanation view of relative relationship of grating pattern configured from diffraction grating with shallow groove, Fourier transform lens, and line sensor;

FIG. 3(B) is an amount of light distribudon graph in the case of camouflage card due to grating pattern configured from diffraction grating with shallow groove;

FIG. 3(C) is an explanation view of grating pattern configured from diffraction grating with shallow groove;

FIG. 4(A) is an explanation view of relative relationship of grating pattern configured from diffraction grating with large dispersion, Fourier transform lens, and line sensor;

FIG. 4(B) is an amount of light distribution graph in the case of camouflage card due to grating pattern configured from diffraction grating with large dispersion;

FIG. 4(C) is an explanation view for explaining grating pattern configured from diffraction grating with large dispersion;

FIG. 5(A) is an explanation view of relative relationship of grating pattern configured from diffraction grating with large pitch width, Fourier transform lens, and line sensor;

FIG. 5(B) is an amount of light distribution graph in the case of camouflage card due to grating pattern configured from diffraction grating with large pitch width;

FIG. 5(C) is an explanation view for explaining grating pattern configured from diffraction grating with large pitch width;

FIG. 6 is a circuit block diagram of the card authenticity judging apparatus according to the first embodiment of the present invention;

FIG. 7(A) is an outline side view of a card authenticity judging apparatus of a second embodiment;

FIG. 7(B) is an outline plan view of the card authenticity judging apparatus of the second embodiment;

FIG. 8(A) is an explanation view of relative relationship of grating pattern, Fourier transform lens, and line sensor of the second embodiment;

FIG. 8(B) is an amount of light distribution graph in the case of authentic card of the second embodiment;

FIG. 9 is a circuit block diagram of the card authenticity judging apparatus of the second embodiment;

FIG, 10 is an explanation view for comparing respective amount of light distribution between the case of authentic card and the case that wear and tear occur as aged deterioration in the card;

FIG. 11 is an explanation view for comparing respective amount of light distribution between the case of authentic card and the case that backward-bend occurs as aged deterioration in the card;

FIG. 12 is an outline side view of the card authenticity judging apparatus in which line sensor for grating pattern image and line sensor for regular reflection image are prepared separately;

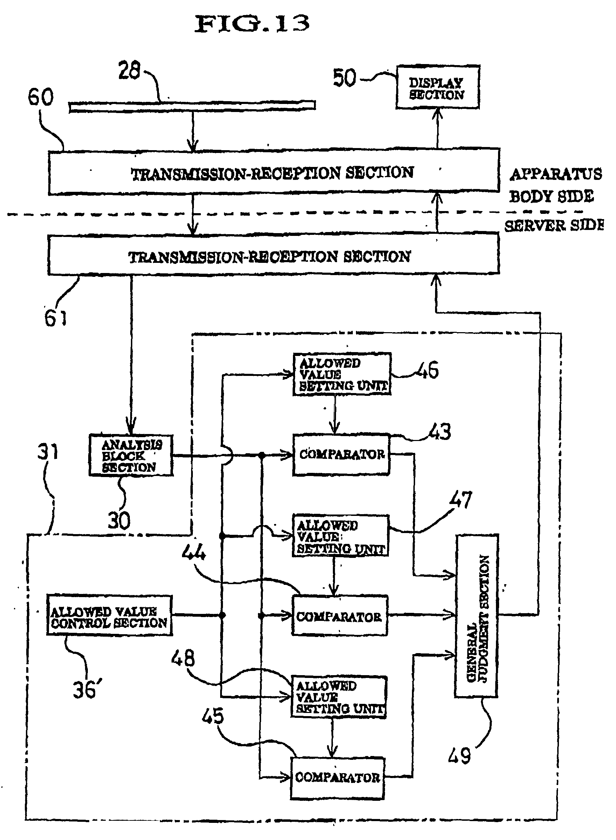

FIG. 13 is a circuit block diagram of being used by a card authenticity judging system of a third embodiment;

FIG. 14 is a circuit block diagram of a first modified example of the third embodiment;

FIG. 15 is a circuit block diagram of a second modified example of the third embodiment;

FIG. 16 is a perspective view illustrating outline configuration of a card authenticity judging apparatus of a fourth embodiment;

FIG. 17(a) is a front view of an explanation view illustrating outline configuration of an optical system of the card authenticity judging apparatus of the fourth embodiment;

FIG. 17(b) is a plan view of an explanation view illustrating outline configuration of the optical system of the card authenticity judging apparatus of the fourth embodiment;

FIG. 18 is a circuit block diagram of the card authenticity judging apparatus of the fourth embodiment;

FIG. 19 is an explanation view for explaining reflected diffraction light of being formed by incidence of parallel measurement light Q1 of heading into hologram seal illustrated in FIG. 33, in which reflected diffraction light is illustrated when incidence of the parallel measurement light Q1 heads from direction at right angles to extending direction of respective diffraction gratings of configuring a grating pattern 4;

FIG. 20 is an explanation view for explaining reflected diffraction light of being formed by incidence of parallel measurement light Q2 of heading into hologram seal illustrated in FIG. 33, in which reflected diffraction light is illustrated when incidence of the parallel measurement light Q2 heads from direction at right angles to extending direction of respective diffraction gratings of configuring a grating pattern 5;

FTG. 21 is an explanation view for explaining reflected diffraction light of being formed by incidence of parallel measurement light Q8 of heading into hologram seal illustrated in FIG. 33, in which reflected diffraction light is illustrated when incidence of the parallel measurement light Q3 heads from direction at right angles to extending direction of respective diffraction gratings of configuring a grating pattern 6;

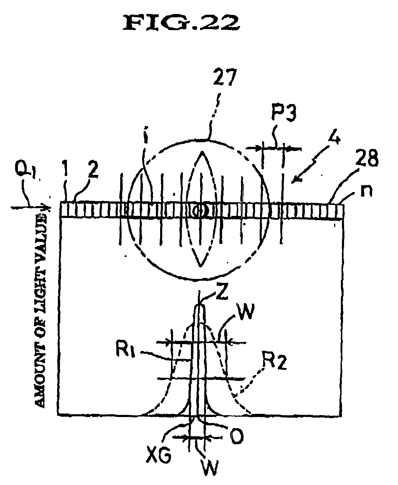

FIG. 22 is an explanation view of amount of light distribution on the basis of reflected diffraction light when incidence of the parallel measurement light Q1 heads from direction at right angles to extending direction of respective diffraction gratings of configuring the grating pattern 4;

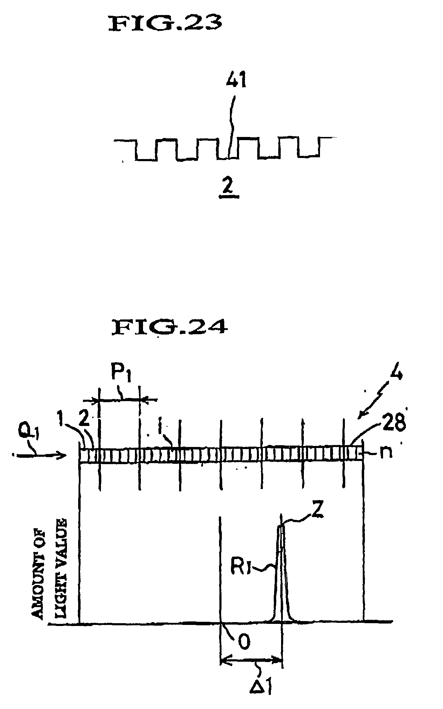

FIG. 23 is an explanation view illustrating depth of a groove of diffraction grating of grating pattern illustrated in FIG. 33;

FIG. 24 is an explanation view of amount of light distribution on the basis of reflected diffraction light when incidence of parallel measurement light Q1 heads from direction at right angles to extending direction of respective diffraction gratings of configuring the grating pattern 4, in which amount of light distribution on the basis of reflected diffraction light of diffraction grating having larger pitch than that of diffraction grating of the grating pattern 4 illustrated in FIG. 22 is indicated.

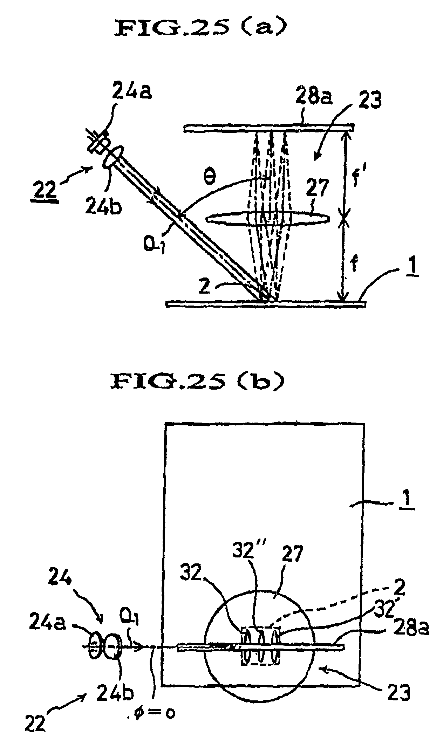

FIG. 25(a) is a front view of an explanation view illustrating outline configuration of an optical system of a card authenticity judging apparatus of a fifth embodiment;

FIG. 25(b) is a plan view of an explanation view illustrating outline configuration of the optical system of the card authenticity judging apparatus of the fifth embodiment;

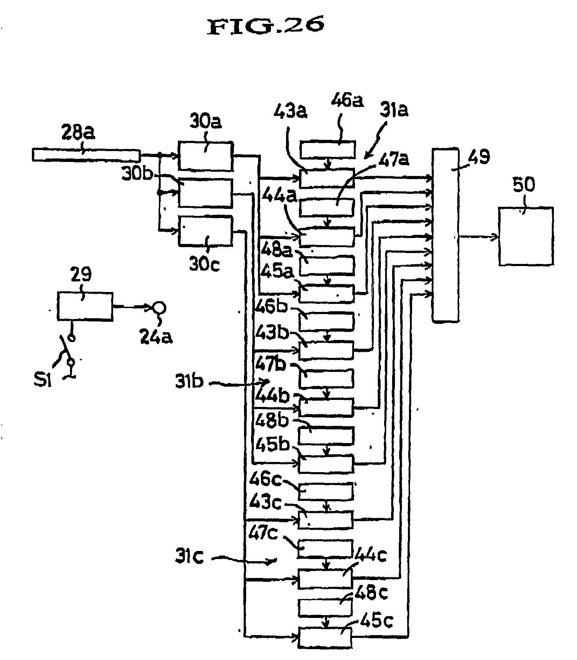

FIG. 26 is a circuit block diagram of the card authenticity judging apparatus of the fifth embodiment;

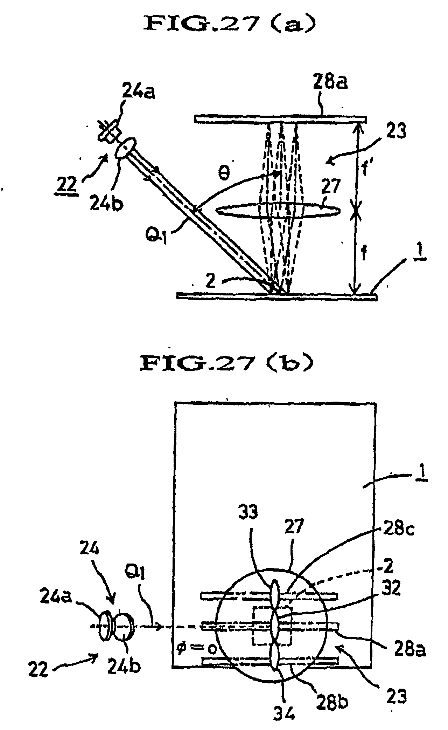

FIG. 27(a) is a front view of an explanation view illustrating outline configuration of an optical system of a card authenticity judging apparatus of a sixth embodiment;

FIG. 27(b) is a plan view of an explanation view illustrating outline configuration of the optical system of the card authenticity judging apparatus of the sixth embodiment;

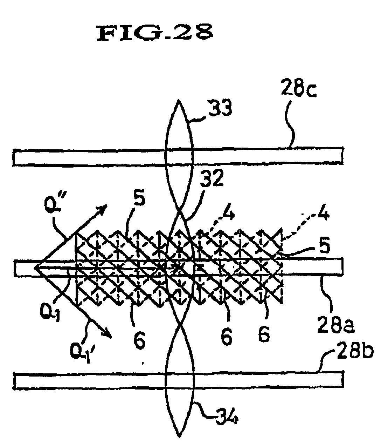

FIG. 28 is an enlarged explanation view for explaining reflected diffraction light formed by incidence of parallel measurement light into hologram seal illustrated in FIG. 33, in which reflected diffraction light is indicated when incidence of parallel measurement light heads from direction at right angles to extending direction of respective diffraction grating of configuring grating pattern;

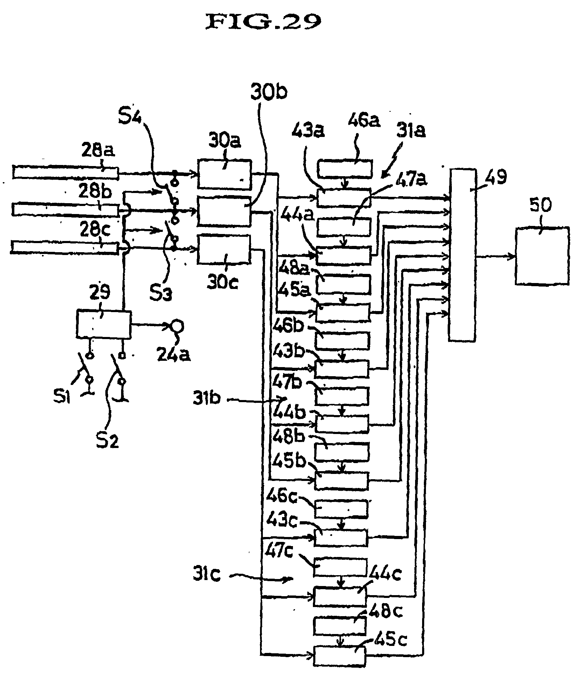

FIG. 29 is a circuit block diagram of the card authenticity judging apparatus of the sixth embodiment;

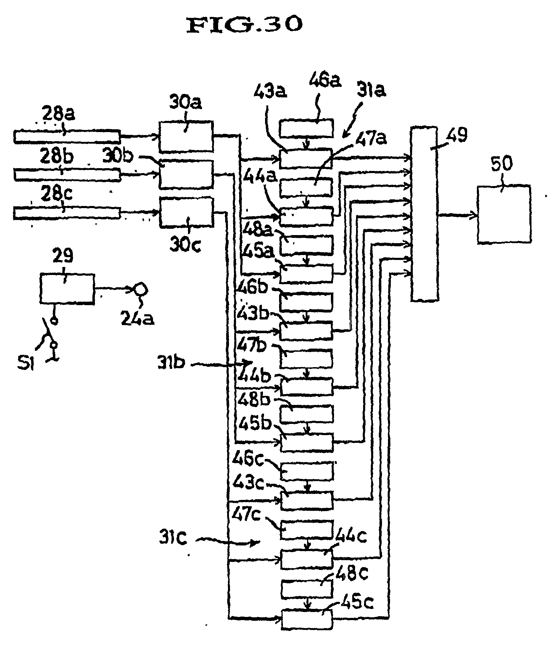

FIG. 30 is a circuit block diagram of a card authenticity judging apparatus of a modified example of the sixth embodiment;

FIG. 31 is a front view of n card which a hologram seal is affixed on its surface;

FIG. 32 is an enlarged view of the hologram seal;

FIG. 33 is an explanation view illustrating one example of grating pattern of being formed at the hologram seal;

FIG. 34(a) is an explanation view for explaining detail of grating pattern illustrated in FIG. 33, in which grating pattern whose arrangement direction of the diffraction grating is formed in the direction at right angles to one side of the hologram seal is illustrated;

FIG. 34(b) is a view illustrating grating pattern in which arrangement direction of diffraction grating is formed in the direction of right oblique 46 degrees direction to arrangement direction of grating pattern illustrated in FIG. 34(a);

FIG. 34(c) is a view illustrating grating pattern in which arrangement direction of diffraction grating is formed in the direction of left oblique 45 degrees direction to arrangement direction of grating pattern illustrated in FIG. 34(a);

FIG. 35 is a view illustrating a rectangular shaped hologram seal in which three kinds of images are formed on the basis of grating pattern configured from diffraction grating with different pitches;

FIG. 36(a) is an explanation view of hologram seal illustrated in FIG. 35, in which image whose diffraction grating is arranged to be formed in the direction at right angles to one side 2a of rectangular shaped hologram seal 2, and on the basis of grating pattern configured from diffraction grating of predetermined pitch is indicated;

FIG. 36(b) is an explanation view of the hologram seal illustrated in FIG. 35, in which image on the basis of grating pattern of being configured from diffraction grating whose direction is the same as arrangement formation direction of diffraction grating illustrated in FIG. 36(a) and whose pitch is different from predetermined pitch is indicated; and

FIG. 36(c) is an explanation view of the hologram seal illustrated in FIG. 35, in which image on the basis of grating pattern of being configured from diffraction grating whose direction is the same as arrangement formation direction of diffraction grating illustrated in FIG. 36(a), FIG. 36(b) and whose pitch is different from pitches illustrated in FIG. 36(a), FIG. 36 (b) is indicated.

THE PREFERRED EMBODIMENTS OF THE INVENTION

[First Embodiment]

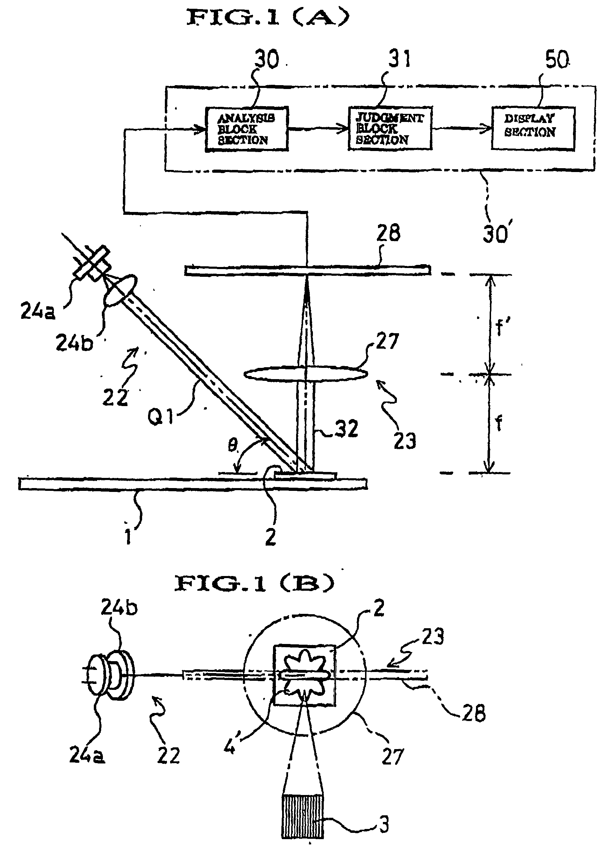

In FIGS. 1(A) and 1(B), reference numeral 22 is a light projecting system for projecting a laser measurement light Q1 toward a hologram seal 2 of being provided at a surface of a card 1, reference numeral 23 is a light receiving system for receiving a reflected diffraction light 32 reflected from the hologram 2, reference numeral 30' is an analysis/judgment section (a judging means) for analyzing to judge authenticity of the card 1 on the basis of the reflected diffraction light 32 of receiving at the light receiving system 23. It should be noted that an image 4' of the hologram on the basis of a grating pattern 3 is formed on the hologram seal 2.

The light projecting system 22 is provided with a semiconductor laser 24a for emitting the lassr measurement light Q1, and a collimator lens 24b for forming parallel luminous flux from the laser measurement light Q1 emitted from the semiconductor laser 24a.

The light receiving system 23 is provided with a Fourier transform lens 27 located at immediately above the hologram seal 2, and a line sensor 28 as a light receiving section. The card 1 is placed at a front focus position f of the Fourier transform lens 27 in connection with its hologram seal 2. The line sensor 28 is located at a rear focus position f of the Fourier transform lens 27 and, as illustrated in FIG. 1(B), is disposed in parallel to the laser measurement light Q1 (illustrated by a light axis). It should be noted that the front focus position f and the rear focus position f have the same distance.

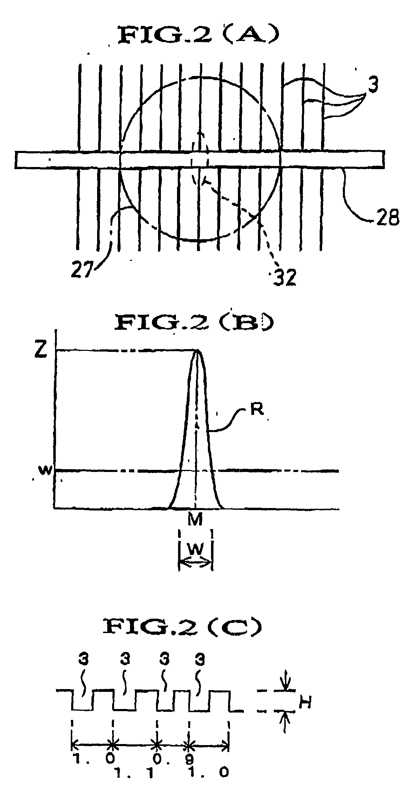

An analysis/judgment section 30' is provided with an analysis block section 30 for analyzing grating pattern image (referring to FIG. 2(A)) of the reflected diffraction light 32 of being formed at the line sensor 28, a judgment block section 31 for conducting authenticity judgment on the basis of photoelectric output output from the analysis block section 30, and a display section 50 for displaying the judgment result.

When the semiconductor laser 24a is turned ON, incidence of the laser measurement light Q1, seen from above, heads to image 4' of the hologram in parallel to the line sensor 28 with an incident angle θ against the hologram seal 2 as constant.

Supposing that the image 4', in this example, whose respective grating patterns 3 are formed with predetermined pitch (for instance, constant pitch width 1.0 μm) in the direction at right angles to extending direction of the line sensor 28. Incident light vector component of heading to the grating pattern 3 only in the direction perpendicular to extending direction of the grating pattern 3 contributes to diffraction phenomena from among parallel luminous flux of laser measurement light Q1-based incident lights of heading into the grating pattern 3.

For that reason, when the laser measurement light Q1-based incident light heads to the image 4' of the hologram, as illustrated in FIG. 2(A), a grating pattern image (primary diffraction light) Q2' is formed in such a way as to position on the line sensor 28 by use of the Fourier transform lens 27.

The line sensor 28 is disposed while supposing that when the grating pattern 3 is aligned with constant pitch width ideally and peak of the laser measurement light Q1 is positioned at center address.

On the other hand, from a practical standpoint, as illustrated in FIG. 2(C), micro dispersion exists on the grating pattern 3. The dispersion, even though the image 4' of hologram is formed in good precision, exists in the extremely fine range.

However, when the image 4' of hologram is rough, dispersion exists in large range. Hereinafter, for convenience of explanation, supposing that when ideal pitch width of the grating pattern 3 is 1.0 μm, pitch error of the grating pattern 3 of image 4' of hologram of authentic card 1 is taken to be not more than ± 0.1 μm, and depth of the grating pattern 3 is taken to be H.

In cases where, the image 4' of hologram of being formed on the card 1 is authentic one, grating pattern image of the grating pattern 3 is formed at approximate center address in the line sensor 28.

FIG. 2(B) illustrates peak intensity Z on the basis of depth H of the grating pattern 3 on this occasion, peak position M on the basis of pitch width of the grating pattern 3, amount of light distribution R of appearing with spread width W at predetermined threshold value w on the basis of dispersion of pitch of the grating pattern 3. The peak intensity Z, peak position M, and spread width W are stored in the judgment block section 31 as authentic judgment allowable reference value.

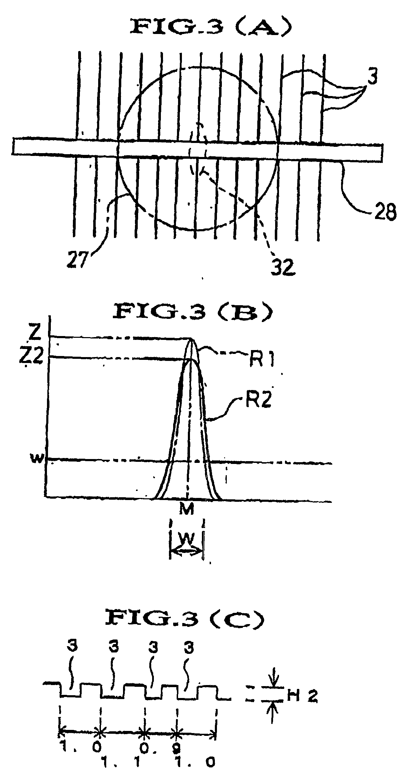

Here, as illustrated in FIG. 3(C), when in the grating pattern image Q3 of the case in which depth of the grating pattern 3 is depth H2 that is shallower than depth H of the grating pattern 3 of authentic card 1, peak intensity Z2 of amount of light distribution R1 becomes lower distribution than peak intensity Z of amount of light distribution R.

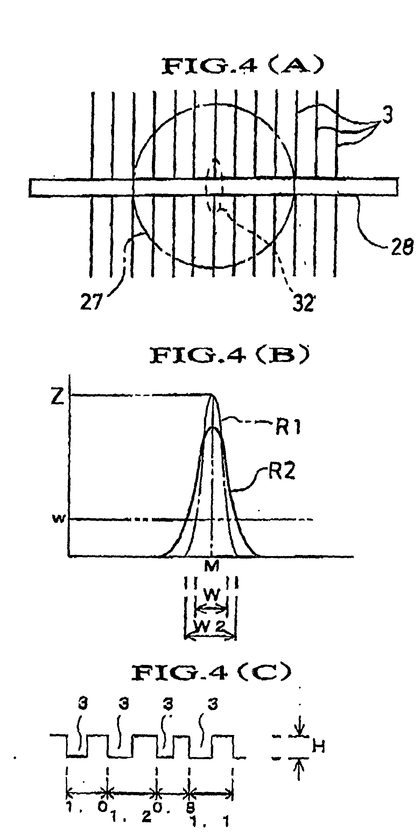

In addition, as illustrated in FIG. 4(C), when in the grating pattern image of the case in which dispersion of pitch of the grating pattern 3 is rougher dispersion (for instance, $\pm$ 0,2 μm or more) than dispersion (for instance, $\pm$ 0.1μm or less) of the grating pattern 3 of authentic card 1, spread width W2 on threshold value w of the amount of light distribution R2 becomes wider distribution than spread width W of amount of light distribution R.

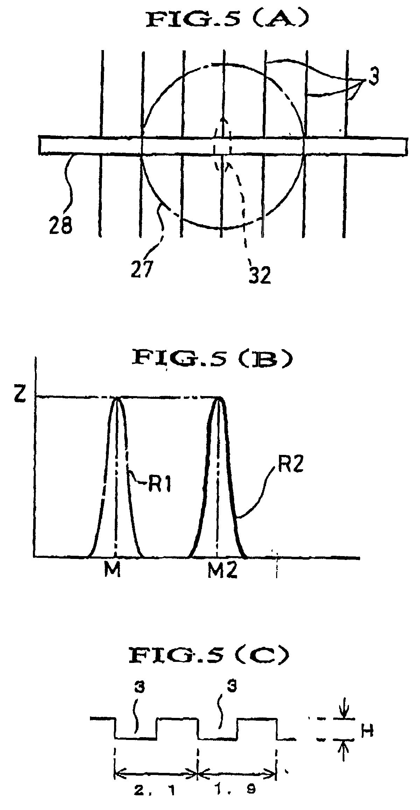

Further, as illustrated in FIG. 5(C), when in the grating pattern image of the case in which pitch width of the grating pattern 3 is wider pitch width (for instance, 2.0 μm) than pitch width (for instance, 1.0 μm) of the grating pattern 3 of authentic card 1, peak position M2 of the amount of light distribution R2 becomes distribution that is shifted rightward from peak position M of amount of light distribution R.

It should be noted that, in the above respective drawings, peak position M of respective amount of light distributions is taken to be reference, however, it is appropriate that center of gravity position XG of respective amount of light distributions is taken to be reference.

Accordingly, the analysis block section 30 analyzes these optical characteristics on the line sensor 28 to output to the judgment block section 31, then the judgment block section 31 compares the output results with the authentic judgment allowable reference values of the peak intensity Z, the peak position M, the spread width W (standard deviation) stored beforehand by using statistical technique, when at least any one of them is different from the authentic judgment allowable refbrence value, or when at least any one of them is larger than allowable valuo of predetermined range, the judgment block section 31 judges the card as counterfeit (camouflage) card to output the judgment result to the display section 50.

For instance, pixel number of the line sensor 28 of total number of pixel n is taken to be 1, 2, ..., i, ... n in turn from left of FIG. 2(A), and photoelectric output of respective pixels is taken to be Xi, after detecting the maximum intensity (peak intensity Z) on the line sensor 28 and pixel number i of indicating the maximum intensity, pixel number (peak position M) corresponding to average value from photoelectric output Xi of respective pixels is made to calculate from following formula (1). In addition, spread W of amount of light distribution is made to obtain from formula (2).

$$M = \sum_{i=1}^{n}(i \times x_i)/\sum_{i=1}^{n}(x_i) \qquad \wedge \text{ (1)}$$

$$W = \sqrt{\sum_{i=1}^{n} x_i \times (M-i)^2 / \sum_{i=1}^{n} x_i} \qquad \wedge \text{ (2)}$$

On this occasion, pixel number that indicates one not more than predetermined value among photoelectric outputs Xi is not used in calculation by the above formulas.

It should be noted that it is appropriate to use formulas (3) and (4) instead of formulas (1) and (2).

$$X_G = \sum_{i=1}^{n}(i \times x_i)/\sum_{i=1}^{n}(x_i) \qquad \wedge \text{ (3)}$$

$$\sigma = \sqrt{\sum_{i=1}^{n} x_i \times (X_G-i)^2 / \sum_{i=1}^{n} x_i} \qquad \wedge \text{ (4)}$$

Here, the analysis block section 30 possesses both function for conducting calculation on the basis of formulas (1) and (2) to store the calculation result temporarily and function for storing the peak intensity Z temporarily.

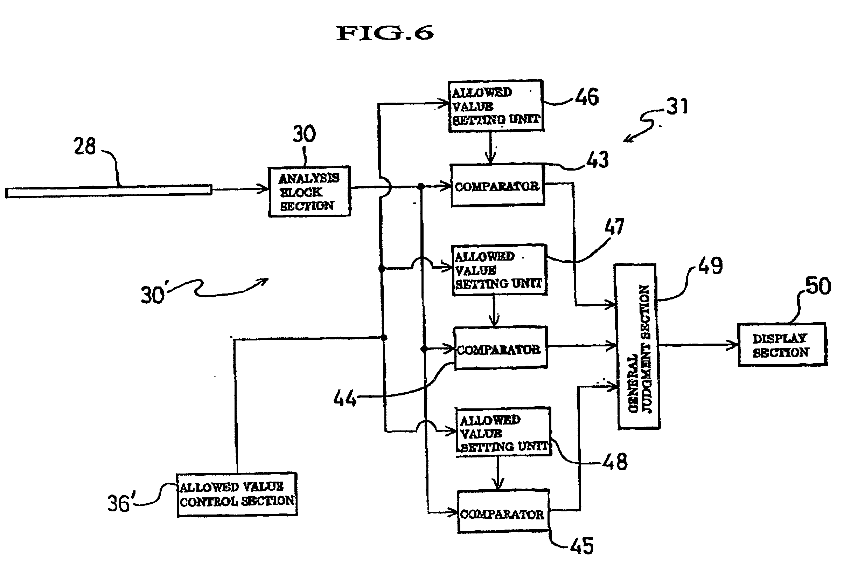

On the other hand, the judgment block section 31, as illustrated in FIG. 6, is provided with an allowed value control section 36', comparators 43 to 45, allowed value setting units 46 to 48, and a general judgment section 49.

The allowed value setting unit 46 sets permitted limit of the peak intensity Z of amount of light distribution, the allowed value setting unit 47 sets permitted limit of the center of gravity position M of amount of light distribution, and the allowed value setting unit 48 sets permitted limit of the spread width W of amount of light distribution.

Since it is not improbable that even though the card 1 is authentic card, the peak intensity Z, the peak position M, and the spread width W of amount of light distribution of the grating pattern 3 of being formed the hologram image 4 are different from the reference values, it is desirable that permitted limits of setting to respective allowed value setting units 46 to 48 are made to control by the allowed value control section 36'.

Analysis output concerning peak intensity Z of being analyzed at the analysis block section 30 is input to the comparator 43, analysis output concerning peak position M of being analyzed at the analysis block section 30 is input to the comparator 44, and analysis output concerning spread width W of being analyzed at the analysis block section 30 is input to the comparator 45.

The comparator 43 compares whether the analysis output concerning the peak intensity Z falls within the peak intensity permitted limit for card authenticity judgment of being set by the allowed value setting unit 46, the comparator 44 compares whether analysis output concerning the peak position M falls within the peak position permitted limit of being set by the allowed value setting unit 47, and the comparator 45 compares whether analysis output concerning the spread width W falls within the spread width permitted limit for card authenticity judgment of being set by the allowed value setting unit 48.

These comparison results are input to the general judgment section 49, then the general judgment section 49, on the basis of these comparison results, judges whether the card is authentic card or camouflage card, so, judgment result is displayed on the display section 50.

Thus, according to this embodiment, authenticity judgment whether the card is authentic card or counterfeit (camouflage) card is made to judge whether the peak intensity Z, the peak position M, and spread width W of amount of light distribution fall within permitted limit, whereby, it is possible to conduct accurate authenticity judgment on the basis of the diffraction grating pattern 3 incapable of being forged (rigged) without conducting authenticity judgment by using the whole image or part image at wide range of the image 4' of hologram.

It should be noted that, as for the card 1, for instance, surface of the grating pattern 3 wears caused by aged deterioration by frequent usage, and/or surface has fine scratches, therefore, if permitted limit of the peak intensity Z, the peak position M, and the spread width W of amount of light distribution at the case of the authentic card 1 is taken to be accurate limit, there is fear that the card is judged as camouflage card in spite of authentic card, accordingly, it is possible to widen slightly respective permitted limits (in particular, peak intensity Z caused by depth of the grating pattern 3).

On this occasion, in cases where although any one of the peak intensity Z, the peak position M, and the spread width W of amount of light distribution is not included in accurately close permitted limit, the value is positioned at somewhat shifted position from the accurate permitted limit while taking into consideration of aforementioned aged deterioration and so forth, the card is judged as temporary authentic card of pseudo limit different from counterfeit (camouflage) limit, and the effect is made to display on the display section 50, for instance, it becomes possible to take correspondence of urging clerk and so forth accepting the card to conduct ascertainment of deterioration and/or scratches by visual check, and of urging the user to change card because deterioration is remarkably.

In the card authenticity judging apparatus according to the first embodiment, accurate authenticity judgment whether the card is authentic card or counterfeit card can be made to conduct by using diffraction grating of being difficult to forge without conducting authenticity judgment by using the whole image and/or part image at wide range of image of hologram.

[Second Embodiment]

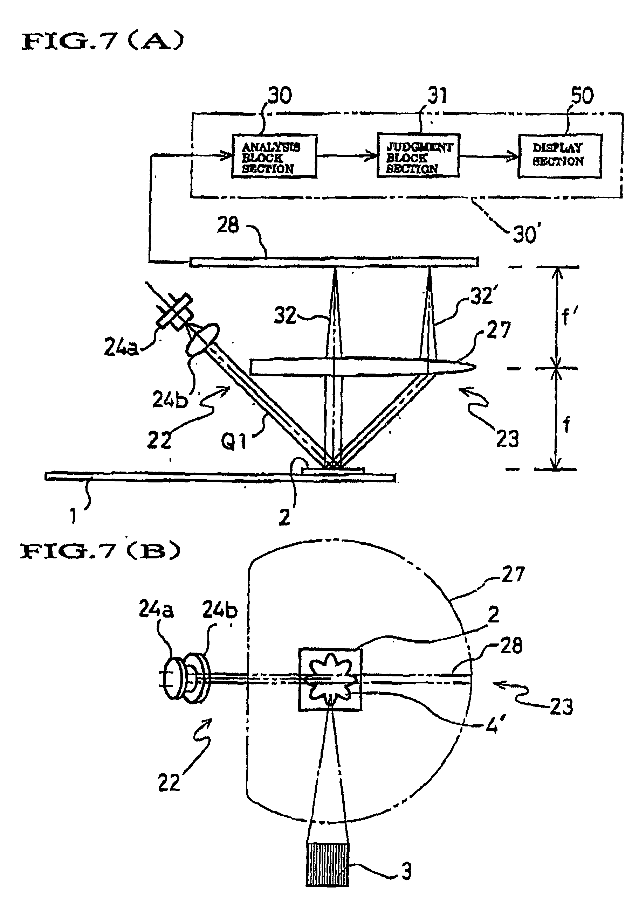

The second embodiment, as illustrated in FIG. 7, has configuration in which the reflected diffraction light 32 is made to receive by the line sensor 28, and a regular reflected light 32S is made to receive by the line sensor 28.

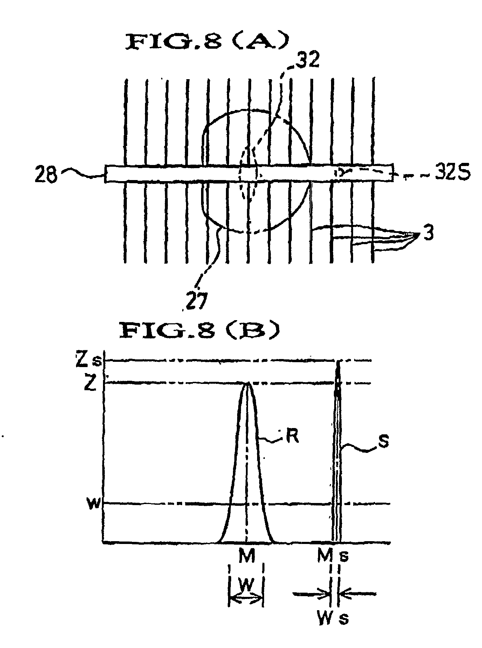

Namely, as illustrated in FIG. 8(A), the Fourier transform lens 27 conducts image formation of both grating pattern image of the reflected diffraction light 32 of being reflected with diffraction at surface of the hologram seal 2, and regular reflected image of the regular reflected light 32S of being regularly reflected at surface of the hologram seal 2, on the line sensor 28.

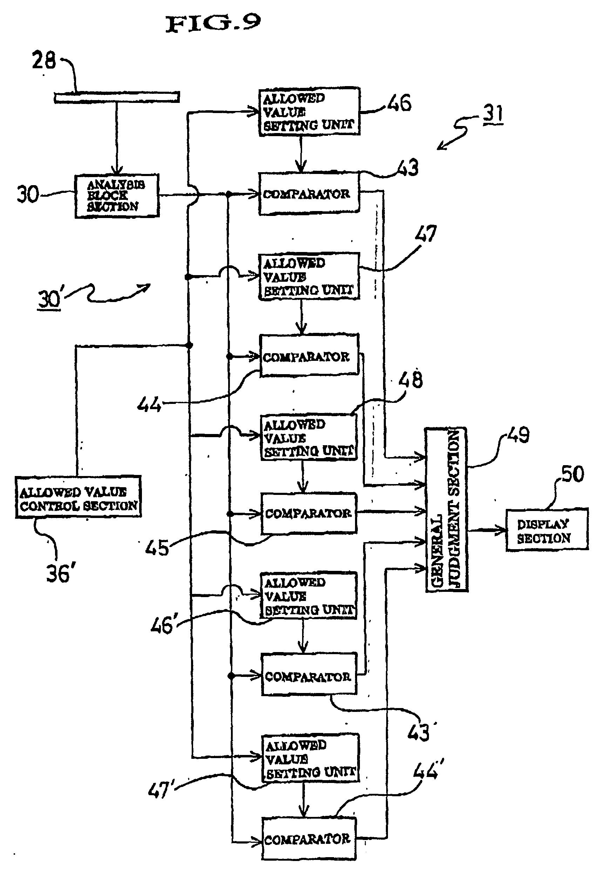

In addition, the analysis/judgment section 30', as illustrated in FIG. 9, has the analysis block section 30 for analyzing both a grating pattern image Q2' of the reflected diffraction light 32 and regular reflected image of the regular inflected light 32S formed on the line sensor 28, and the judgment block section 31 for conducting authenticity judgment on the basis of photoelectric output that is output from the analysis block section 30.

The judgment block section 31 has allowed value setting units 46', 47' and comparators 43', 44' in addition to the allowed value setting units 46 to 48, and the comparators 43 to 45 as shown in the first embodiment.

Analysis output is input to the cnmparators 43 to 45 in the same way as the first embodiment, role of the comparators 48 to 45' and role of the allowed value setting unite 46 to 48 are the same as that of the first embodiment.

The allowed value setting unit 46' sets authentic permitted limit of spread width Ws indicated by amount of light distribution S of FIG. 8(B). the allowed value setting unit 47' sets authentic permitted limit of peak position Ms of amount of light distribution S. It should be noted that it is appropriate that center of gravity position of amount of light distribution S is uasd instead of the peak position Ms.

Since it can be considered that although the card 1 is the authentic card, spread width Ws, and peak position Ms of amount of light distribution S may be different from that of the reference values, it is desirable to control authentic permitted limit set to respective allowed value setting unite 46', 47' by using the allowed value control section 36'.

Analysis output concerning spread width Ws of being analyzed at the analysis block section 30 is input to the comparator 43', and analysis output concerning peak position Ms of being analyzed at the analysis block section 30 is input to the comparator 44'.

The comparator 43' compares whether analysis output concerning apread width Ws falls within spread width reference permitted limit for card authenticity judgment reference set by the allowed value setting unit 46', and the comparator 44' compares whether analysis output concerning peak position Ms falls within peak position reference permitted limit for card authenticity judgment reference set by the allowed value setting unit 47'.

These comparison result is input to the general judgment section 49, then the general judgment section 49 judges whether the card is authentic card or counterfeit card on the basis of these comparison result, so, judgment result is displayed on the display section 50.

It should be noted that, as for the card 1, for instance, a surface of the grating pattern 3 wears caused by aged deterioration by frequent usage, and/or surface has fine scratches. In addition, backward bend (babit) occurs because it is always carried.

In the case of such wear and tear (including scratches), and/or backward bend, for instance, in the case of wear and tear, reflected amount of light decreases from the amount of the case that the card is authentic card as groove depth H became shallow, and in the case of backward bend, image formation position on the line sensor 28 is shifted from the position of the case that the card is authentic card as pitch width were different.

So, regular reflected image on the basis of the regular reflected light 32S is made to form image formation on the line sensor 28, thus judgment of grating pattern image is conducted with the regular reflected image as reference.

Namely, the regular reflected image of being formed as image formation on the line sensor 28, as illustrated in amount of light distribution S of FIG. 8(B), is one in which spread width Ws on threshold value w is narrower than spread width W on threshold value w on the basis of grating pattern image and amount of light distribution has a sharp shape with high peak intensity Zs at peak position Ms.

Accordingly, regular reflected image of the case that the card is the authentic card 1 is taken to be measurement reference image, and the spread width Ws end the peak position Ms are made to monitor, when there is analysis output from the comparators 43', 44' that the spread width Ws and the peak position Ms do not fall within spread width reference permitted limit or peak position reference permitted limit, it is possible to conduct authenticity judgment regardless of wear and tear and/or backward bend if analysis output from the comparator 43 through the comparator 45 is made to take into consideration at the general judgment section 49.

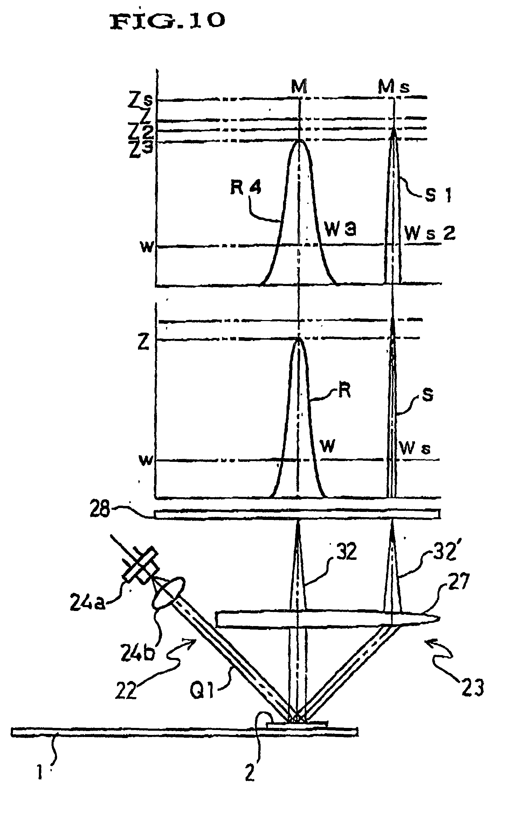

For instance, as illustrated in FIG. 10, when wear and tear occur on the hologram seal 2 of the card 1, amount of light distributions R4, S1 of respective images formed on the line sensor 28 are low in connection with their peak intensities Z3, Ps2 and are wide in connection with their spread widths W3, Ws2 to amount of light distributions R, S at the time of authentic case.

Consequently, spread width W3 at the amount of light distribution R4 obtained actually is made to compensate on the basis of variation ratio between spread width Ws at the amount of light distribution S of the time of refexenoe and spread width Ws2 at the amount of light distribution S1 obtained actually, if spread width W3 after compensation falls within permitted limit at the spread width W, judgment is made to conduct as authentic card. It should be noted that, as for variation of peak intensity Z3, similarly, it is also appropriate that the peak intensity Z3 may be made to compensate by using variation ratio between the peak intensity Zs and the peak intensity Zs2, as well as area of amount of light distribution R4 may be made to compensate by using variation ratio.

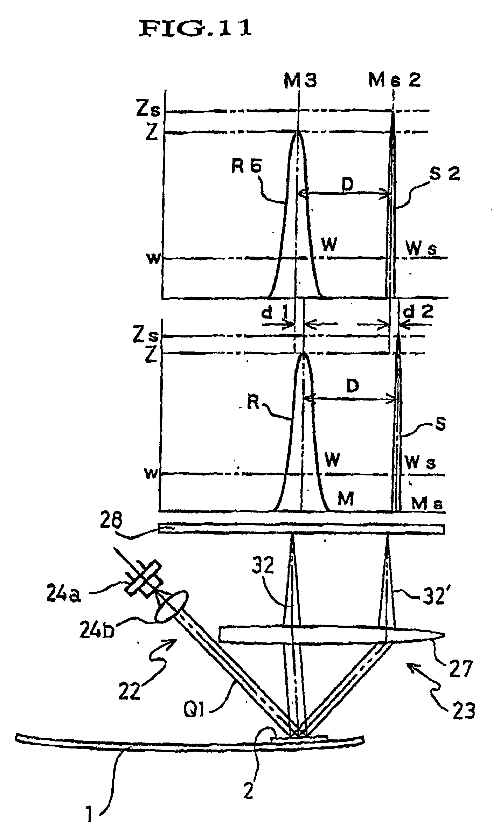

In addition, as illustrated in FIG. 11, when backward bend occurs in the card 1, deviations d1, d2 occur in amount of light distributions R5, S2 of respective images formed on the line sensor 28 against amount of light distributions R, S at the time the card is authentic, caused by change of reflection direction.

On this occasion, deviation amount of respective deviations d1, d2 are the same amount when deviation is caused by backward bend of the card 1.

Accordingly, if peak position M3 falls within permitted limit on the peak position M, authentic judgment is made on the occasion that deviation d1 of peak position M3 is made to compensate by only corresponding deviation d2 from distance D1 between peak positions M, Ms of amount of light distributions R, S at the time of reference and peak positions M3, Ms2 at amount of light distribution S2 obtained actually.

Thus, according to the second embodiment, authenticity judgment whether the card 1 is authentic card or counterfeit card is made to judge whether the peak intensity Z, the peak position M, and the spread width W of amount of light distribution R fall within permitted limit, and when, with amount of light distribution S as reference, its reference spread width Ws and its reference peak position Ms do not fall within reference permitted limit, it is possible to improve reliability of authenticity judgment in such a way as to compensate judgment result while judging that aged deterioration occurs on the card 1.

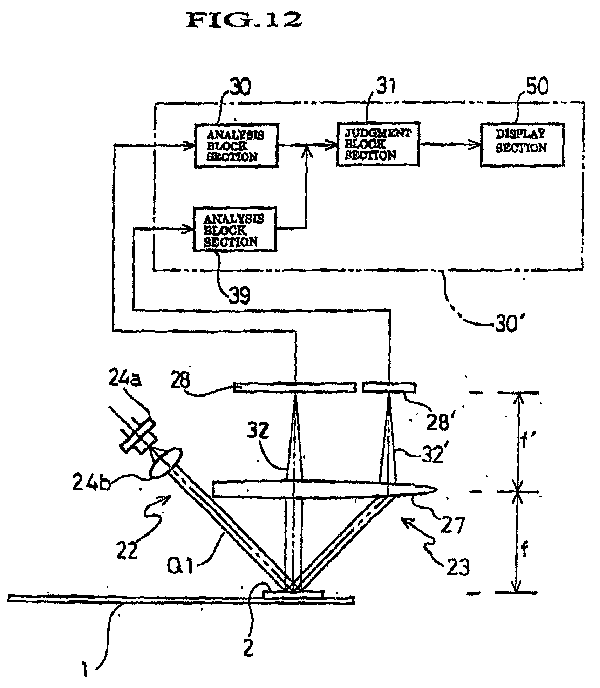

In addition, as illustrated in FIG. 12, the line sensor 28 is taken to be one for judging the grating pattern image, and an additional line sensor 28' different from the line sensor 28 is provided at the same position as the rear side focus position f, thus it is possible to use the line sensor 28' which is one for judging the regular reflected image.

In this case, the analysis block section 30 possesses function of role for analyzing photoelectric output from the line sensor 28', and similarly judgment is conducted at the judgment block section 31.

[Third Embodiment]

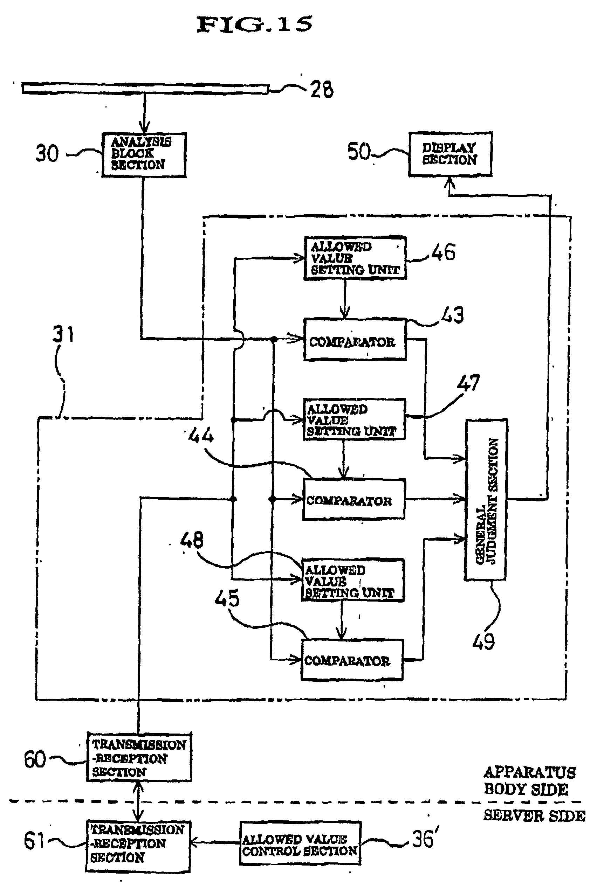

In the card 1, for instance, there is a case in which different hologram image 4 or different grating pattern 3 is used according to card company (production company) or according to renewal, in order to conduct authenticity judgment despite different of kinds of card caused by such card company and/or renewal and so forth, as illustrated in FIG. 15, total system is made to configure in such a way that optical system having the line sensor 22 and the display section 50 are taken to be terminal of the apparatus body, and the analysis block section 30 and the judgment block section 31 are disposed at server side of being disposed at the card company and/or head office and ao forth.

Configuration and operation of the analysis block section 30 and apparatus body section are the same as that of the first embodiment.

Due to the configuration and operation, output from the line sensor 28 is transmitted to a transmission-reception section (or interface) 61 of the server side via a transmission-reception section (or interface) 60, so, above described analysis is conducted at the analysis block section 30, and comparison/general judgment is conducted using allowed value from the allowed value control section 36' of storing the latest reference allowed value depending on kinds of the cards, thus the judgment result is displayed on the display section 50 via the transmission-reception section 60 of terminal side from the transmission-reception section 61 of the server side.

[Modified Example 1]

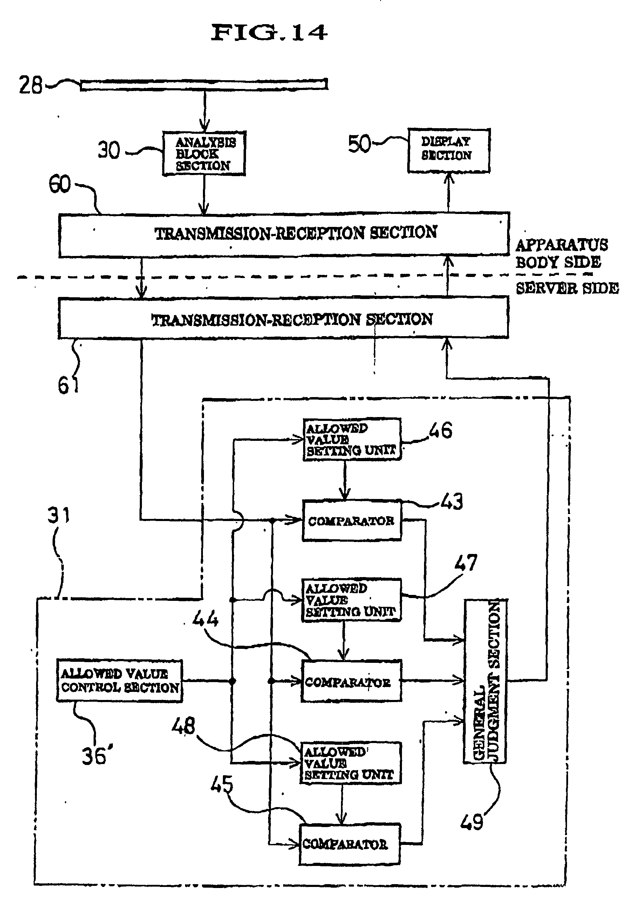

In addition, as illustrated in FIG. 14, it is appropriate that the apparatus body that is provided with the optical system having the line sensor 28, the analysis block section 30, and the display section 50, is taken to be terminal, the judgment block section 31 is provided at the server side of the card company and/or the head office and so forth.

Due to the configuration, output from the line sensor 28 is analyzed at the analysis block section 30, after that, the analyzed result is transmitted to the transmission-reception section 61 of the sever side through the transmission-reception section 60, then, comparison/general judgment is conducted using allowed value from the allowed value control section 36' of storing the latest reference allowed value depending on kinds of the cards, thus the judgment result is displayed on the display section 50 via the transmission-reception section 60 of the terminal side from the transmission-reception section 61 of the server side.

[Modified Example 2]

In addition, as illustrated in FIG. 15, it is appropriate that the whole except for the allowed value control section 36' are disposed at the apparatus body side, and only the allowed value control section 36' is disposed at the server side of the card company and/or the head office and so forth.

For this configuration, output from the line sensor 28 is analyzed at the analysis block section 30, after that, general judgment is conducted at the general judgment section 49 using allowed value from the allowed value control section 36' of storing the latest reference allowed value depending on kinds of the cards via the transmission-reception sections 60, 61, to display on the display section 50.

On this occasion, concerning installation of the server, as described above, if at least reference allowed value can be controlled, it is also appropriate to use alternate server and so forth except for the above server, whereby, if operation from analysis to judgment or judgment is conducted at the server side, judgment is not conducted at the terminal side namely, judgment is not conducted at the store and so forth, therefore, it is also possible to conduct batch control of connection and/or procedure such as service and/or change to the user on the basis of judgment result.

Furthermore, since a telecommunication line is utilized, for instance, connection between one server and the other server is executed easily, whereby, for example, utilization for crime-prevention becomes possible, in which judgment result of counterfeit card is made to transmit to the server of being installed at the police station and/or card insurance company.

[Forth Example]

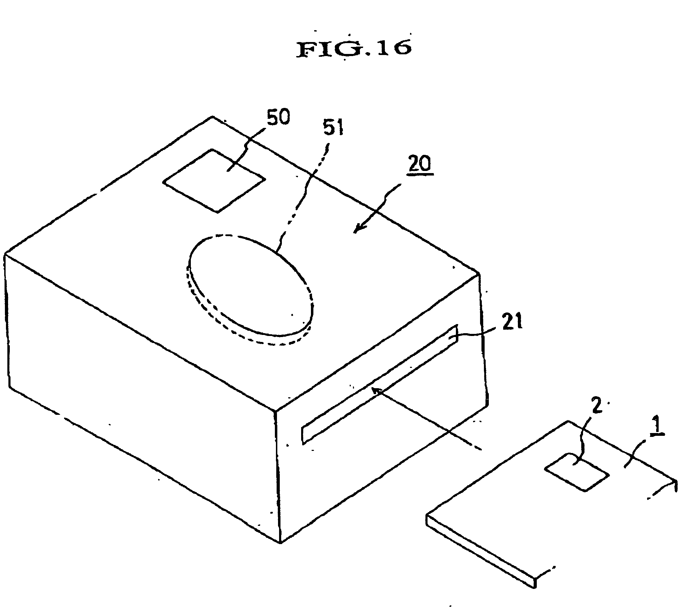

FIG. 16 is a perspective view illustrating outline configuration of a card authenticity judging apparatus of a fourth embodiment.

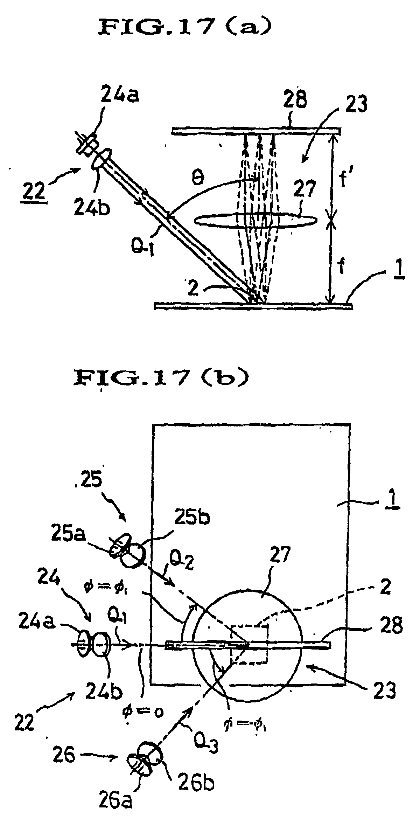

In FIG. 16, reference numeral 20 indicates a box of the card authenticity judging apparatus. The box 20 is provided with an entrance and exit 21 of the card 1. As illustrated in FIGS. 17(a) and 17(b), in the inside of the box 20, there are provided the light projecting system 22 for projecting measurement light to the hologram 2 that is provided at the card 1 and forms image on the basis of grating pattern, the light receiving system 23 for detecting reflected diffraction light of being reflected from the hologram 2, and a circuit block section that will be described later.

Here, the light projecting system 22 is made up of three laser light source sections 24 to 26. Respective laser light source sections 24 to 26 consist of semiconductor lasers 24a to 26a, and collimate lenses 24b to 26b. The collimate lenses 24b to 26b serves on role of converting laser light emitted from the semiconductor lasers 24a to 26a into parallel measurement light. Configuration of tha light receiving system 23 is the same as that of the first embodiment.

The card 1 is set at the front focus position f of the Fourier transform lens 27 after being brought in the box 20.

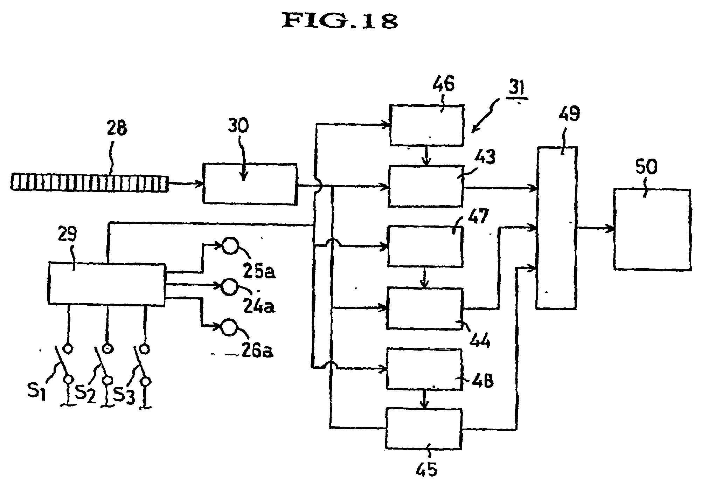

The circuit block section, as illustrated in FIG. 18, consists of a control block section 29, the analysis block section 30, and the judgment block section 31. The control block section 29 possesses function for conducting both lighting/putting-out-lights control of the laser light source sections 24 to 26 and setting-control of allowed value of authenticity judgment of allowed value setting unit described later.

Selection switches S1, S2, and S3 as incident direction changing means (incident direction selecting means) are connected to the control block section 29. When selecting the selection switch S1, the semiconductor laser 24a is turned ON, when selecting the selection switch S2, the semiconductor laser 25a is turned ON, and when selecting the selection switch S3, the semiconductor laser 26a is turned ON.

When the semiconductor laser 24 is turned ON, the parallel measurement light Q1, as illustrated in FIG. 17(a), heads with incident angle θ toward the hologram seal 2 as constant, as illustrated in FIG. 17(b), incidence into the hologram seal 2 is made from incident direction of angle $\phi = 0$ against extending direction of the line sensor 28.

When the semiconductor laser 25a is turned ON, the parallel measurement light Q2 heads with incident angle θ toward the hologram seal 2 as constant, as illustrated in FIG. 17(b), incidence into the hologram seal 2 is made from incident direction of angle $\phi = \phi1$ against extending direction of the line sensor 28.

When the semiconductor laser 26a is turned ON, the parallel measurement light Q3 heads with incident angle θ toward the hologram seal 2 as constant, as illustrated in FIG.17(b), incidence into the hologram seal 2 is made from incident direction of angle $\phi = -\phi1$ against extending direction of the line sensor 28. Incident direction of measurement light toward the hologram seal 2 is changed depending on the selection switches S1, S2, and S3.

Supposing that images 8, 9, and 10 on the basis of three grating patterns 4, 5, and 6 are formed on the hologram seal 2 here. And supposing that incidence of the parallel measurement light Q1 heads from direction at right angles to extending direction of respective diffraction gratings of the grating pattern 4, incidence of the parallel measurement light Q2 heads from direction at right angles to extending direction of respective diffraction gratings of the grating pattern 5, and incidence of the parallel measurement light Q3 heads from direction at right angles to extending direction of respective diffraction gratings of the grating pattern 6.

About diffraction phenomenon, explanation was already made in the first embodiment, however, diffraction phenomenon will be arranged to be explained again.

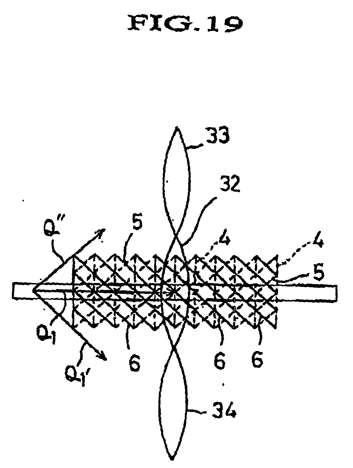

Since incident light vector component whose incident direction heads at right angles to extending direction of diffraction grating among incident parallel measurement lights of heading to diffraction grating contributes to diffraction phenomenon, for instance, when incidence of parallel measurement light Q1 is made to head to the hologram seal 2 from direction of incident direction $\phi = 0$ degree, as illustrated in FIG. 19, the reflected diffraction light (primary diffraction light) 32 on the basis of the grating pattern 4 is formed in such a way as to te positioned on the line sensor 28.

On the other hand, since incident light vector component Q1' of the parallel measurement light Q1 contributes to diffraction and reflected vector component of the parallel measurement light Q1 exists, reflected diffraction light 33 on the basis of the grating pattern 5 is formed at one-side-shifted position from the line sensor 28.

In addition, since incident light vector component Q1" of the parallel measurement light Q1 contributes to diffraction and reflected vector component of the parallel measurement light Q1 exists, and that, the reflected vector component has opposite direction to reflected vector component on the basis of the grating pattern 5, reflected diffraction light 34 on the basis of the grating pattern 6 is formed, with the line sensor 28 as boundary, at opposite-side-shifted position to the reflected diffraction light 33.

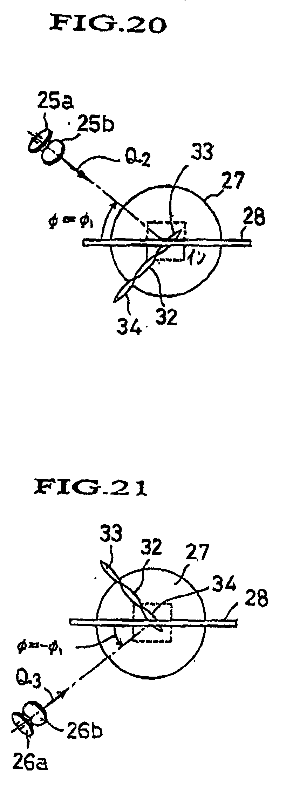

In addition, for instance, as illustrated in FIG. 20, incidence of the parallel measurement light Q2 is made to head to the hologram seal 2 from direction of incident direction $\phi = \phi 1$, the reflected diffraction light 33 on the basis of the grating pattern 5 is formed in such a way as to be positioned on the line sensor 28. In addition, for instance, as illustrated in FIG. 21, incidence of the parallel measurement light Q3 is made to bead to the hologram seal 2 from direction of incident direction $\phi = \cdot\phi1$, the reflected diffraction light 34 on the basis of the grating pattern 6 is formed in such a way as to be positioned on the line sensor 28.

Supposing that incidence of the parallel measurement light Q1 is made to bead to the hologram seal 2 while aiming at only the grating pattern 4 and pitch P3 of diffraction grating of the grating pattern 4 are ideally aligned with constant intervals, as illustrated in FIG. 22 by solid line, amount of light distribution R1 of the reflected diffraction light 32 with sharp peak and narrow spread width W is detected on the line sensor 28.

When pitch P3 of diffraction grating is not constant interval, but is varied, as illustrated in FIG. 22 by dotted line, amount of light distribution R2 of the reflected diffraction light 82 having larger spread width W than spread width W of amount of light distribution R1 on the line sensor 28. Peak intensity Z of the reflected diffraction light 32, as illustrated in FIG. 23, is determined depending on depth (phase depth) of a groove 41 of diffraction grating of being formed on the hologram seal 2.

In addition, when large pitch P1 based-diffraction grating different from pitch P3 of diffraction grating is formed on the hologram seal 2, as illustrated in FIG. 24, position of peak intensity Z of amount of light distribution R1 of reflected diffraction light 32, on the supposition that position of peak intensity Z of amount of distribution R1 of pitch P3 based-reflected diffraction light 32" of diffraction grating is positioned at original point (light axis center of the light receiving system) O, is shifted, for instance, by only $\Delta1$ from the original point to right side. In addition, small pitch P2 based-diffraction grating different from pitch P3 of diffraction grating is formed on the hologram seal, peak intensity of amount of light distribution shifts to left side on the contrary to the above.

Since the authentic card is controlled strictly on its pitch of diffraction grating, depth of groove of diffraction grating of being formed on the hologram seal 2, it is considered that peak intensity Z of amount of light distribution of reflected diffraction light, center of gravity position XG of the amount of light distribution, and spread width W of the amount of light distribution fall within permitted limit.

On the contrary, in the counterfeit card, pitch of diffraction grating is largely different from pitch of diffraction grating of authentic card, pitch is approximately the same as that of the authentic card, however, dispersion of pitches is large, and/or depth of the groove 41 of the diffraction grating is largely different from depth of groove of diffraction grating of authentic card. These appear as optical characteristics of peak intensity of amount of light distribution, center of gravity position of the amount of light distribution, and spread of the amount of light distribution of reflected diffraction light, therefore, it becomes possible to judge whether the card is authentic card or counterfeit card in such a way as to analyze these optical characteristics.

It should be noted that, instead of center of gravity position of respective reflected luminous flux, or in addition thereto, it is appropriate to judge depending on mutual intervals of center of gravity position of respective reflected luminous flux.

In addition, as already explained at column of conventional art, according to kinds of the card, in the case of the counterfeit card in which only one image is formed although three images on the basis of three grating patterns with different directions should be formed on the hologram seal 2, three reflected diffraction lights 32, 33, and 34 can not be obtained, but only one reflected diffraction light is obtained, accordingly, it is possible to judge whether the card is counterfeit card depending on the number of peak intensity Z of reflected diffraction light.

Accordingly, if photoelectric output on the basis of the reflected diffraction lights 32, 33, and 34 detected by the line sensor 28, as illustrated in FIG. 18, are made to input to the analysis block section 30, in this analysis block section 30, peak intensity Z of amount of light distribution of the reflected diffraction lights 32, 33, and 34, center of gravity position XG thereof, spread width W (standard deviation σ) are made to calculate by using statistical method, it is possible to judge whether the card is authentic card or counterfeit card.

In this calculation, the formulas (3), (4) described in the first embodiment are used.

The analysis section 30 possesses both function of storing temporarily the calculation result therein while conducting calculation on the basis of the above described formulas (3), (4) and function of storing temporarily therein peak intensity Z.

Analysis output of this analysis block section 30 is input to the judgment block section 31. The judgment block section 31 is roughly made up of the comparators 43, 44, and 45, the allowed value setting units 46, 47, and 48, and the general judgment section 49.

The allowed valve setting unit 46 sets permitted limit of peak intensity Z of amount of light distribution, the allowed value setting unit 47 sets permitted limit of center of gravity position of amount of light distribution, and the allowed value setting unit 48 sets permitted limit of spread width of amount of light distribution.

Even though, the card is the authentic card, since it is not improbable that peak intensity Z, center of gravity position XG, and spread width W of amount of light distribution are different in every grating patterns 4, 5, and 6 of forming images 8, 9, and 10, it is desirable that permitted limit of providing to the respective allowed value setting units 46, 47, and 48 are made to change accompanying with manipulation of the selection switches S1, S2, and S3.

Peak intensity analysis output is input to the comparator 43 from the analysis block section 30, center of gravity position analysis output is input to the comparator 44 from the analysis block section 30, and spread width analysis output is input to the comparator 45 from the analysis block section 30.

The comparator 43 compares whether peak intensity analysis output falls within peak intensity permitted limit for the sake of card authenticity judgment set by the allowed value setting unit 46, the comparator 44 compares whether center of gravity position analysis output falls within center of gravity position permitted limit set by the allowed value setting unit 47, and the comparator 45 compares whether spread width analysis output falls within spread width permitted limit for the sake of card authenticity judgment set by the allowed value setting unit 48.

These comparison results are input to the general judgment section 49, and the general judgment section 49, on the basis of these comparison results, judges whether the card is authentic card or counterfeit card, so, the judgment result thereof is displayed on the display section 50.

According to the fourth embodiment, whether the card is authentic card or counterfeit card is capable of being judged by procedure that will be explained later.

For instance, explanation will be made to conduct when the authentic card 1 is provided with the hologram seal 2 on which image on the basis of three kinds of grating patterns is formed and measurement light is made to project to the hologram seal 2 while changing incident direction of the measurement light into three directions with the result that three peaks of diffraction lights should be obtained to be detected.

Incident direction of measurement light against the hologram seal 2 is made to change in order while manipulating the selection switches S1, S2, and S3 in turn. Subsequently, judgment is made whether peak intensity Z of amount of light distribution, center of gravity position XG thereof, and spread width W thereof fall within permitted limit in every incident direction of respective measurement directions against the hologram seal 2. In some cases of counterfeit card, only image on the basis of one grating pattern is formed, since, in such counterfeit card, peak intensity of reflected diffraction light obtained in such a way as to project measurement light while changing incident direction into three directions against the hologram seal 2 can be obtained only one, it is possible to judge surely the card as fake one. In addition, even though the counterfeit card is formed somewhat elaborately, since it is possible to conduct authenticity judgment of the card depending on whether peak intensity Z of amount of light distribution of reflected diffraction light, center of gravity position XG thereof, and spread width W thereof fall within permitted limit for the sake of authenticity judgment in every incident direction of measurement light against the hologram seal while changing incident direction of measurement light against the hologram seal 2 in turn, it is possible to enhance precision of card authenticity judgment.

In addition, according to kind of the card, in some cases, it is possible to judge whether the card is counterfeit card when only specific one kind of grating pattern is judged among images on the basis of three kinds of grating patterns. In this case, incident direction of measurement light against the hologram seal 2 is made to select automatically to be fixed corresponding to the card on the basis of photoelectric output from kind of a card judging means such as a card number reading means or while specifying kind of the card manually, so, it is possible to judge whether the card is counterfeit card due to judgment whether peak intensity Z of amount of light distribution of reflected diffraction light to the incident direction that is selected to be fixed in such a way as above, center of gravity position XG thereof, spread width W thereof fall within permitted limit.

In the fourth embodiment, card authenticity judgment is made to conduct in such a way that there are provided three semiconductor lasers, so, the semiconductor lasers are made to turn ON sequentially due to manipulation of the selection switches S1, S2, and S3 in order to change incident direction of measurement light to the hologram seal 2, however, only one semiconductor laser is provided, as illustrated in FIG. 16 by dotted line, configuration may be adopted in which a rotary table 51 for rotating the card 1 with the card 1 supported is provided within the box 20, and incident direction of measurement light to the hologram seal 2 is made to change due to manipulation of the selection switches S1, S2, and S3 while rotating the card 1.

In addition, configuration may be adopted in which one semiconductor laser and one collimator lens are set to miller-cylinder, so, the miller-cylinder is mounted on a revolution arm (not illustrated), wherein incident direction φ to the hologram seal 2 is made to change while maintaining incident angle θ to the hologram seal 2 into constant value.

According to the authenticity judging apparatus of the forth embodiment, there is the effect that it is possible to judge objectively authenticity of the card of having hologram on which image on the basis of grating pattern is formed.

In particular, since the configuration is made to judge authenticity of the card 1 in such a way as to detect reflected diffraction light on the basis of various incident directions while changing incident direction to the hologram, there is the advantageous effect that judgment precision of authenticity of the card is improved.

In addition, there is the advantageous effect that it is possible to reduce judgment time in such a way as to select to be fixed incident direction so as to head toward the hologram seal from the correct position that authenticity can be made to judge with the best condition corresponding to kind of the card 1.

[Fifth Embodiment]

In this fifth embodiment, the light projecting system 22, as illustrated in FIG. 25, is configured by only the laser light source section 24. Configuration of the light receiving system 23 is the same as that of the fourth embodiment.

A circuit block section consists of, as illustrated in FIG. 26, the control block section 29, analysis block sections 80a to 30c, and judgment block sections 31a to 31c. The control block section 29 conducts only lighting/putting-out-lights control of the laser light source section 24.

The Lighting/putting-out-lights switch S1 is connected to the control block section 29, When manipulating the lighting/putting-out-lights switch S1, a semiconductor laser 24a is turned ON.

When the semiconductor laser 24a is turned ON, incidence of the parallel measurement light Q1, as illustrated in FIG. 25(a), with the incident angle θ to the hologram seal 2 as constant, as illustrated in FIG. 25(b), heads to the hologram seal 2 from incident direction of angle φ = 0 toward extending direction of a line sensor 28a.

Supposed that images 8", 9", and 10" on the basis of three grating patterns 4", 5", and 6" of illustrating in FIG. 36 are formed on the hologram seal 2. Incidence of the parallel measurement light Q1 heads from direction at right angles to extending direction of respective diffraction gratings of the grating pattern 4.

As explained at the fourth embodiment, since incident light vector component of heading from direction at right angles to extending direction of diffraction grating contributes to the diffraction phenomenon from among incidence of parallel measurement lights of heading to diffraction grating, when incidence of the parallel measurement light Q1 is made to head to the hologram seal 2 from direction of incident direction φ = 0 degree, as illustrated in FIG. 25(b), a plurality of reflected diffraction lights (primary diffraction lights) 32, 32', and 32" on the basis of the grating patterns 4", 5", and 6" are formed in such away as to be positioned on the line sensor 28a.

Accordingly, three images on the basis of three grating patterns with different pitches of diffraction grating should be formed on the hologram seal 2, however, in the case of counterfeit card in which only one image is formed, three reflected diffraction lights 32, 32', and 32" can not be obtained, namely, since only one reflected diffraction light is obtained, it becomes to judge whether the card is counterfeit card depending on the number of peak intensity Z of reflected diffraction light.

Consequently, as illustrated in FIG. 26, photoelectric output on the basis of reflected diffraction lights 32, 32', and 32" detected by the line sensor 28a is input to the analysis block sections 30a to 30c, then the analysis block sections 30a to 30c calculate peak intensity Z of amount of light distribution of the reflected diffraction lights 32, 32', and 32", respective center of gravity positions XG thereof, respective spread width W (standard deviation σ) while using statistical method in the same way as the first embodiment, with the result that it is possible to judge whether the card is authentic card or counterfeit card.

Respective analysis block sections 30a to 30c possesses function of storing temporary therein the calculation result whilo conducting calculation on the basis of the formulas (3), (4) of the first embodiment, and function of storing temporary theisin peak intensity Z.

Analysis output of the analysis block sections 30a to 30c are input to the judgment block sections 31a to 31c. The judgment block sections 31a to 31c are roughly made up of comparators 43a to 43c, 44a to 44c, and 45a to 45c, allowed value setting units 46a to 46c, 47a to 47c, and 48a to 48c, and the general judgment section 49.

The allowed value setting units 46a to 46c set permitted limit of peak intensity Z of amount of light distribution, the allowed value setting unite 47a to 47c set permitted limit of center of gravity position of amount of light distribution, and allowed value setting units 48a to 48c set permitted limit of spread width of amount of light distribution.

Respective peak intensity analysis outputs are input to the comparators 43a to 43c from the analysis block sections 30a to 30c, respective center of gravity position analysis outputs are input to the comparators 44a to 44c from the analysis block sections 30a to 30c, and respective spread width analysis outputs are input to the comparators 45a to 45c from the analysis block sections 30a to 30c.

The comparators 43a to 43c compare whether peak intensity analysis output falls within peak intensity permitted limit for the sake of card authenticity judgment set by the allowed value setting units 46a to 46c, the comparators 44a to 44c compare whether center of gravity position analysis output falls within center of gravity position permitted limit set by the allowed value setting units 47a to 47c, and the comparators 45a to 45c compare whether spread width analysis output falls within spread width permitted limit for the sake of card authenticity judgment set by the allowed value setting units 48a to 48c.

These comparison results are input to the general judgment section 49, then, the general judgment section 49 judges whether the card is authentic card or counterfeit card on the basis of these comparison results, so, judgment result is displayed on the display section 50 in the same way as the fourth embodiment.

According to the fifth embodiment, it is possible to judge whether the card is authentic card or counterfeit card depending on following description.

For instance, the hologram seal 2 on which image on the basis of three kinds of grating patterns with the same arrangement formation direction of diffraction grating and different pitches are formed is provided on the authentic card 1, and three peaks of diffraction light obtained in such a way as to project measurement light to the hologram seal 2 should be detected from the authentic card 1, accordingly, when only one peak intensity of reflected diffraction light obtained in such a way as to project measurement light to the hologram seal 2 is obtained, it is possible to judge surely the card to be counterfeit card.

In addition, even though the counterfeit card is formed somewhat elaborately, it is possible to conduct authenticity judgment of the card accurately in such a way that judgment is made whether peak intensity of amount of light distribution of respective reflected diffraction lights 32, 32', and 32" obtained in such a way as to project measurement light to the hologram seal 2, center of gravity position thereof, and spread width thereof fall within permitted limit for authenticity judgment.

[Sixth Embodiment]

As already described above, according to kinds of the cards, as illustrated in FIG. 34, some cards have the hologram seal 2 on which three images 8, 9, and 10 on the basis of three grating patterns 4, 5, and 6 with different arrangement formation direction of diffraction gratings are formed.

In this case, the reflected diffraction light 32 on the basis of the grating pattern 4, as illustrated in FIGS. 27 and 28, is formed on the line sensor 28a. On the other hand, since the incident light vector component Q1' of parallel measurement light Q1 contributes to diffraction and reflected vector component of the parallel measurement light Q1 exists, the reflected diffraction light 33 on the basis of the grating pattern 5 is formed at one-side-shifted position from the line sensor 28a.

In addition, since the incident light vector component Q1" of parallel measurement light Q1 contributes to diffraction and reflected vector component of the parallel measurement light Q1 exists, and that, the reflected vector component has opposite direction to reflected vector component on the basis of the grating pattern 5, the reflected diffraction light 34 on the basis of the grating pattern 6 is formed, with the line sensor 28a as boundary, at opposite-side-shifted position to the reflected diffraction light 33.

Accordingly, line sensors 28b, 28c are provided in parallel to the line sensor 28a at position on Which the reflected diffraction lights 33, 34 are formed.

Then, as illustrated in FIG. 29, respective line sensors 28a to 28c are connected to respective analysis block sections 30a to 30c. Further, respective analysis block sections 30b, and 30c are capable of being connected to the line sensor 28a via connection switches S3, and S4. The control block section 29 is provided with a connection changing switch S2' in parallel to the lighting/putting- out-lights switch S1, in which circuit is formed in such a way that when the connection changing switch S2' is turned ON, the connection switches S3, and S4 are turned ON, above configuration is one in which photoelectric output of the line sensor 28a is made to input simultaneously to respective analysis block section 30a to 30c.

Under such configuration, when the connection changing switch S2' is OFF, it is possible to conduct authenticity judgment of the card of having the hologram seal 2 on which three images 8, 9, and 10 are formed on the basis of three grating patterns 4, 5, and 6 with different arrangement formation direction of diffraction grating. Namely, it is possible to judge authenticity of the card in which arrangement formation direction of a plurality of reflected diffraction light is perpendicular to extending direction of the line sensor.

In addition, when the connection changing switch S2' is ON, it is also possible to conduct authenticity judgment of the card in which arrangement formation direction (arrangement formation direction of a plurality of reflected diffraction lights) of respective diffraction gratings of forming respective grating patterns is the same direction as extending direction of the line sensor 28a and pitches of diffraction grating is different.

[Modified Example]

It should be noted that, in the sixth embodiment, there are provided switches S, S', S3, and S4 illustrated in FIG. 29, and authenticity of the card 1 is conducted in which the card 1 is one that has hologram which is provided on the card 1 and on which a plurality of images on the basis of grating pattern with different arrangement formation direction of diffraction grating are formed, however, as illustrated in FIG, 30, configuration may be adopted in which photoelectric output of respective line sensors 28a to 28c are made to input independently to respective analysis block sections 30a to 30c, by using only the switch S1, judgment is made to conduct about authenticity of the card 1 of having thereon hologram on which a plurality of images are formed on the basis of grating pattern with different arrangement formation direction of diffraction grating.

According to the authenticity judging apparatus of the fifth embodiment and the sixth embodiment, it is possible to judge authenticity of the card objectively and in high speed in which the card has hologram on which a plurality of images on the basis of grating pattern are formed.

[Effect of the Invention]

According to the present invention, authenticity judgment whether the card is authentic card or camouflage card is capable of being conducted strictly while using diffraction grating of being difficult to forge without conducting authenticity judgment by using the whole image of hologram image and/or part image at wide range.

In addition, it is possible to improve reliability of judgment result. Further, it is possible to conduct authenticity judgment of the card objectively.

In this case, there is the effect that judgment precision of authenticity of the card is improved if configuration is adopted in which authenticity of the card is judged while detecting reflected diffraction light on the basis of various incident directions with incident direction to hologram varied.

In addition, there is the effect that it is possible to reduce judgment time if configuration is adopted in which incident direction is selected to be fixed so that incidence of measurement light heads to hologram seal from the correct direction capable of being judged authenticity with the best condition corresponding to kind of the card.

In addition, it is possible to judge objectively and speedy authenticity of the card having hologram on which a plurality of images on the basis of grating pattern are formed.

According to the card authenticity judgment system of the present invention, it is possible to conduct authenticity judgment whether the card is authentic card or counterfeit card speedy and easily further with high precision depending on kind of the card.

**Claims**

**1.** A card authenticity judging apparatus comprising:

a light projecting system for projecting laser measurement light toward hologram that is provided on a surface of a card and on which an image on the basis of grating pattern is formed; a Fourier transform lens for forming grating pattern image on the basis of reflected diffraction luminous flux of being reflected from said hologram on its light receiving section; and
judging means for judging authenticity of said card on the basis of photoelectric output from said light receiving section.

2. The card authenticity judging apparatus as claimed in claim 1, wherein said judging means is provided with a display section for displaying its judgment result.

3. The card authenticity judging apparatus as claimed in claim 1 or claim 2, wherein said judging means judges authenticity of said card on the basis of analysis result from an analysis section that analyzes grating pattern image.

4. The card authenticity judging apparatus as claimed in claim 3, wherein said analysis section outputs its analysis result to said judging means while analyzing formation position of grating pattern image, peak intensity, and spread width.

5. The card authenticity judging apparatus as claimed in claim 4, wherein said judging means, when all of formation position of grating pattern image, peak intensity, and spread width are authentic, judges the card to be authentic card and displays the effect of being authentic card on said display section.

6. The card authenticity judging apparatus as claimed in claim 4, wherein said judging means, when any one or more from among formation position of grating pattern image, peak intensity, and spread width is camouflage, judges the card to be camouflage card and displays the effect of being camouflage card on said display section.

7. The card authenticity judging apparatus as claimed in claim 4, wherein said judging means, when all of formation position of grating pattern image, peak intensity, and spread width is authentic, judges the card to be authentic card, when any one thereof is pseudo within predetermined analysis limit, judges the card to be temporarily authentic card, and when any one or more thereof is camouflage, judges the card to be pseudo card, displays the judgment result on said display section.

8. The card authenticity judging apparatus as claimed in claim 4, wherein said judging means, when plural kinds of pitches or directions of grating pattern exist, judges by using analysis result from one of them of from the whole.

9. A card authenticity judging apparatus comprising:

a light projecting system for projecting laser measurement light toward a hologram which is provided on a card surface and on which an image is formed on the basis of grating pattern;
a light receiving system for receiving grating pattern image on the basis of reflected diffraction light of being reflected from said hologram and regularly reflected image due to regularly reflected luminous flux of being regularly reflected from the hologram; and
judging means for judging authenticity of said card on the basis of both said grating pattern image and said regularly reflected image.

10. The card authenticity judging apparatus as claimed in claim 9, wherein said light receiving system has one light receiving section that receives both said grating pattern image and said regular reflected image with common use condition.

11. The card authenticity judging apparatus as claimed in claim 10, wherein said light receiving system has one Fourier transform lens which is provided for the sake of common use of causing said light receiving section to receive both said grating pattern image and said regular reflected image.

12. The card authenticity judging apparatus as claimed in any one of claim 9 to claim 11, wherein said judging means is provided with a display section for displaying judgment result.

13. The card authenticity judging apparatus as claimed in any one of claim 9 to claim 12, wherein said judging means judges authenticity of said card on the basis of photoelectric output from an analysis section of outputting both analysis results concerning formation position of grating pattern image, peak intensity, and spread width as well as analysis results concerning light receiving position of regular reflected image and spread width.

14. The card authenticity judging apparatus as claimed in claim 13, wherein said judging means, when all of analysis results concerning formation position of grating pattern image of being analyzed at said analysis section, peak intensity, and spread width fall within permitted limit, judges the card to be authentic card and displays the effect of being authentic card on said display section.

15. The card authenticity judging apparatus as claimed in claim 13, said judging means, when any one or more of analysis results concerning formation position of grating pattern image of being analyzed at said analysis section, peak intensity, and spread width does not fall within permitted limit, judges the card to be counterfeit card and displays the effect of being counterfeit card on said display section.

16. The card authenticity judging apparatus as claimed in claim 13, wherein said judging means, when all of analysis results concerning formation position of grating pattern image of being analyzed at said analysis section, peak intensity, and spread width is authentic, judges the card to be aurthentic card, when any one thereof falls within predetermined limit deviated from permitted limit, judges the card to be temporarily authentic card, and when any one or more thereof does not fall within the predetermined limit, judges the card to be pseudo card, and displays the judgment result on said display section.

17. The card authenticity judging apparatus as claimed in any one of claim 14 to claim 16, wherein said judging means, when obtaining analysis result in which light receiving position of regular reflected image shifts from normal position, judges analysis result of grating pattern image in consideration of the analysis result.

18. The card authenticity judging apparatus as claimed in any one of claim 14 to claim 16, wherein said judging means, when obtaining analysis result in which spread width of regular reflected image is wider than formal width, judges analysis result of grating pattern image in consideration of the analysis result.

19. The card authenticity judging apparatus as claimed in any one of claim 9 to claim 18, wherein said judging means, when plural kinds of pitches or plural kinds of directions of grating pattern exist, judges the card by using one of them or by using a plurality of analysis results.

20. A card authenticity judging apparatus comprising:

    a light projecting system for projecting measurement light toward hologram which is provided on a card and on which an image on the basis of grating pattern formed; and
    a light receiving system for detecting reflected diffraction light of being reflected from said hologram.

    wherein, in order to judge whether the card is authentic card or counterfeit card, there is provided an incident direction changing means for changing incident direction of said measurement light toward said hologram.

21. The card authenticity judging apparatus as claimed in claim 20, wherein said incident direction changing means changes incident direction to hologram depending on kinds of cards.

22. The card authenticity judging apparatus as claimed in claim 20 or claim 21, further comprising:

    a judging means for judging authenticity of said card while analyzing respective reflected diffraction lights obtained in such a way as to change incident direction of said measurement light to said hologram.

23. The card authenticity judging apparatus as claimed in claim 20 or claim 21, wherein said light receiving system is made up of a line sensor for receiving said reflested diffraction light, and a Fourier transform lens that is put between the line sensor and said card.

24. The card authenticity judging apparatus as claimed in claim 20 or claim 21, wherein said light projecting system is provided with a plurality of laser light sources, said incident direction changing means is a lighting/putting-out-lights switch for causing said respective laser light sources to be subjected to lighting/putting-out-lights.

25. The card authenticity judging apparatus as claimed in claim 20 or claim 21, wherein said light projecting system is provided with a laser light source and a revolving means for revolving the laser light source to said card, and said incident direction changing means is composed of said revolving means.

26. The card authenticity judging apparatus as clamed in claim 20 or claim 21, wherein said incident direction changing means is a revolving means for revolving the card with said card supported.

27. The card authenticity judging apparatus as claimed in claim 22, wherein said judging means changes its allowed value of authenticity judgment of said card accompanying with change of incident direction of said measurement light.

28. A card authenticity judging apparatus comprising:

    a light projecting system for projecting measurement light toward hologram which is provided on a card and on which a plurality of images on the basis of a plurality of grating patterns are formed;
    a light receiving system having a line sensor for detecting a plurality of reflected diffraction lights of being subjected to reflection and diffraction due to said grating pattern; and
    judging means for judging whether said card is authentic card or counterfeit card while analyzing photoelectric output on the basis of said respective reflected diffraction lights of said line sensor.

**29.** The card authenticity judging apparatus as claimed in claim 28, wherein arrangement formation direction of said plurality of reflected diffraction light is the same direction as extending direction of said line sensor.

**30.** The card authenticity judging apparatus as claimed in claim 28, wherein arrangement formation direction of said plurality of reflected diffraction lights is direction perpendicular to extending direction of said line sensor.

**31.** The card authenticity judging apparatus as claimed in claim 28, wherein said light projecting system consists of one laser light source.

**32.** The card authenticity judging apparatus as claimed in claim 28, wherein said light receiving system has a Fourier transform lens that is put between said line sensor and said card.

**33.** A card authenticity judging apparatus comprising:

a light projecting system for projecting measurement light toward hologram which is provided on a card and on which a plurality of images on the basis of grating pattern whose arrangement formation direction of diffraction grating is different are formed;
a light receiving system having a plurality of line sensors for detecting respective reflected diffraction lights of being subjected to reflection and diffraction due to said respective diffraction grating; and
judging means for judging whether the card is authentic card or counterfeit card while analyzing photoelectric output on the basis of said respective reflected diffraction lights of said respective line sensors.

**34.** The card authenticity judging apparatus as claimed in claim 33, wherein said light receiving system has a Fourier transform lens that is put between said line sensor and said card.

**35.** A card authenticity judging system comprising:

an apparatus body that is provided with an optical system whose light receiving section receives grating pattern image of laser measurement light of being projected toward hologram which is provided on a surface of a card and on which an image on the basis of grating pattern is formed; and a server of storing therein allowed reference value for judging authenticity of said card on the basis of grating pattern image.

wherein, in order to judge authenticity of card while comparing photoelectric output concerning said grating pattern image with the allowed reference value of being stored in said server, said apparatus body is made to connect to said server through a telecommunication line.

**36.** The card authenticity judging system as claimed in claim 35, wherein said optical system is provided with a Fourier transform lens for causing grating pattern image to be received by said light receiving section.

**37.** The card authenticity judging system as claimed in claim 35 or claim 36, wherein said apparatus body is provided with a display section for displaying judgment result.

**38.** The card authenticity judging system as claimed in any one of claim 35 to claim 37, wherein said server is provided with an analysis section for receiving to analyze photoelectric output of grating pattern image transmitted from said light receiving section, and a judging means for conducting authenticity judgment based on both analysis result by the analysis section and allowed reference value of being stored in said server, then, said server transmits the judgment result to said apparatus body.

**39.** The card authenticity judging system as claimed in any one of claim 35 to claim 37, wherein said apparatus body is provided with an analysis section for receiving to analyze photoelectric output of grating pattern image transmitted from said light receiving section and for transmitting the analysis result to said server, and said server is provided with a judging means for judging authenticity of said card based on both analysis result transmitted from said analysis section and allowed reference value of being stored in said server, and for transmitting the judgment result to said apparatus body.

**40.** The card authenticity judging system as claimed in any one of claim 35 to claim 37, wherein said apparatus body is provided with an analysis section for receiving to analyze photoelectric output of grating pattern image transmitted from said light receiving section, and a judging means for conducting authenticity judgment based on both allowed reference value received from said server and analysis result of said analysis section.

**41.** The card authenticity judging system as claimed in any one of claim 38 to claim 40, wherein said analysis section outputs analysis result concerning formation position of grating pattern image, peak intensity, spread width to said judging means.

**42.** The card authenticity judging system as claimed in claim 41, wherein said judging means, when all of analysis results concerning formation position of grating pattern image analyzed by said analysis section, peak intensity, spread width falls within permitted limit, judges the card to be authentic card.

**43.** The card authenticity judging system as claimed in claim 39, wherein said judging means, when all of analysis results concerning formation position of grating pattern image of being analyzed at said analysis section, peak intensity, and spread width is authentic, judges the card to be authentic card, when any one thereof falls within predetermined limit deviated from permitted limit, judges the card to be temporarily authentic card, and when any one or more thereof does not fall within the predetermined limit, judges the card to be pseudo card.

**44.** The card authenticity judging system as claimed in any one of claim 38 to claim 43, wherein said judging means, when plutal kinds of pitches or plural kinds of directions of grating pattern exist, judges the card by using one of them or by using a plurality of analysis results.

## FIG.1 (A)

## FIG.1 (B)

## FIG.2 (A)

## FIG.2 (B)

## FIG.2 (C)

# FIG.3 (A)

# FIG.3 (B)

# FIG.3 (C)

# FIG.4 (A)

# FIG.4 (B)

# FIG.4 (C)

## FIG.5 (A)

## FIG.5 (B)

## FIG.5 (C)

FIG.6

EP 1 195 712 A1

FIG.7 (A)

FIG.7 (B)

## FIG.8 (A)

## FIG.8 (B)

# FIG.9

# FIG.10

## FIG.11

## FIG.12

# FIG.13

TRANSMISSION-RECEPTION SECTION — APPARATUS BODY SIDE

SERVER SIDE

TRANSMISSION-RECEPTION SECTION

DISPLAY SECTION

ALLOWED VALUE SETTING UNIT

ANALYSIS BLOCK SECTION

COMPARATOR

ALLOWED VALUE SETTING UNIT

ALLOWED VALUE CONTROL SECTION

COMPARATOR

GENERAL JUDGMENT SECTION

ALLOWED VALUE SETTING UNIT

COMPARATOR

# FIG.14

28

30 ANALYSIS BLOCK SECTION

50 DISPLAY SECTION

60

TRANSMISSION-RECEPTION SECTION

APPARATUS BODY SIDE

SERVER SIDE

TRANSMISSION-RECEPTION SECTION

61

46 ALLOWED VALUE SETTING UNIT

43 COMPARATOR

31

47 ALLOWED VALUE SETTING UNIT

44

ALLOWED VALUE CONTROL SECTION

36'

COMPARATOR

GENERAL JUDGMENT SECTION

48 ALLOWED VALUE SETTING UNIT

45

49

COMPARATOR

# FIG.15

28

30 — ANALYSIS BLOCK SECTION

50 — DISPLAY SECTION

46 — ALLOWED VALUE SETTING UNIT

43 — COMPARATOR

47 — ALLOWED VALUE SETTING UNIT

44

31

COMPARATOR

GENERAL JUDGEMENT SECTION

48 — ALLOWED VALUE SETTING UNIT

45

COMPARATOR

49

60 — TRANSMISSION -RECEPTION SECTION

APPARATUS BODY SIDE

SERVER SIDE

61 — TRANSMISSION -RECEPTION SECTION

ALLOWED VALUE CONTROL SECTION — 36′

EP 1 195 712 A1

# FIG.16

FIG.17 (a)

FIG.17 (b)

FIG.18

FIG.19

## FIG.20

## FIG.21

EP 1 195 712 A1

## FIG.22

42

EP 1 195 712 A1

## FIG.23

41

2

## FIG.24

$P_1$

4

$P$

1

2

28

n

AMOUNT OF LIGHT VALUE

Z

$R_1$

0

$\Delta 1$

FIG.25 (a)

FIG.25 (b)

# FIG.26

## FIG.27 (a)

## FIG.27 (b)

## FIG.28

FIG.29

# FIG.30

## FIG.31

## FIG.32

FIG.33

FIG.34 (a)　　FIG.34 (b)　　FIG.34 (c)

FIG.35

FIG.36 (a)   FIG.36 (b)   FIG.36 (c)

# INTERNATIONAL SEARCH REPORT

| International application No. |
| --- |
| PCT/JP01/03335 |

**A. CLASSIFICATION OF SUBJECT MATTER**
Int.Cl$^7$   G06K 17/00, 7/12, B42D15/10

According to International Patent Classification (IPC) or to both national classification and IPC

**B. FIELDS SEARCHED**

Minimum documentation searched (classification system followed by classification symbols)
Int.Cl$^7$   G06K 17/00, 7/12, B42D15/10, G03H1/22

Documentation searched other than minimum documentation to the extent that such documents are included in the fields searched
Jitsuyo Shinan Koho         1926-1996      Jitsuyo Shinan Toroku Koho  1996-2001
Kokai Jitsuyo Shinan Koho   1971-2001      Toroku Jitsuyo Shinan Koho  1994-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 10-143621 A (American Bank Note Holographic Inc.),<br>29 May, 1998 (29.05.98),<br>Full text; all drawings   (Family: none) | 1,3<br>2,35-40<br>4-19,41-44 |
| X<br>A | JP 6-68295 A (Dainippon Printing Co., Ltd.),<br>11 March, 1994 (11.03.94),<br>Par. No. [0018]; Fig. 2<br>& EP 563931 A2      & US 5444225 A | 20<br>21-27 |
| X<br>Y | JP 8-1538 B2 (Dainippon Printing Co., Ltd.),<br>10 January, 1996 (10.01.96),<br>Full text; all drawings   (Family: none) | 28,31<br>29,30,32-34 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>16 July, 2001 (16.07.01) | Date of mailing of the international search report<br>24 July, 2001 (24.07.01) |
| --- | --- |
| Name and mailing address of the ISA/<br>   Japanese Patent Office | Authorized officer |
| Facsimile No. | Telephone No. |

Form PCT/ISA/210 (second sheet) (July 1992)